(19) Europäisches Patentamt
European Patent Office
Office européen des brevets

(11) **EP 4 167 626 A1**

(12) **EUROPEAN PATENT APPLICATION**
published in accordance with Art. 153(4) EPC

(43) Date of publication:
**19.04.2023 Bulletin 2023/16**

(21) Application number: **21842640.1**

(22) Date of filing: **06.07.2021**

(51) International Patent Classification (IPC):
**H04W 24/02** (2009.01)    **H04L 25/02** (2006.01)
**H04L 27/34** (2006.01)

(52) Cooperative Patent Classification (CPC):
**H04L 25/02; H04L 27/34; H04W 24/02;** Y02D 30/70

(86) International application number:
**PCT/CN2021/104772**

(87) International publication number:
**WO 2022/012381 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.07.2020  CN 202010682134**

(71) Applicant: **Huawei Technologies Co., Ltd.
Longgang District,
Shenzhen,
Guangdong 518129 (CN)**

(72) Inventors:
• **YU, Tianhang**
  **Shenzhen, Guangdong 518129 (CN)**
• **WANG, Jian**
  **Shenzhen, Guangdong 518129 (CN)**
• **ZHANG, Gongzheng**
  **Shenzhen, Guangdong 518129 (CN)**
• **LI, Rong**
  **Shenzhen, Guangdong 518129 (CN)**
• **WANG, Jun**
  **Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(54) **DATA TRANSMISSION METHOD AND APPARATUS**

(57)    This application provides a data transmission method and apparatus, which can reduce a quantization error that occurs when a low-precision ADC processes a preamble sequence. This can improve precision and accuracy of channel estimation of a device with low power consumption, and optimize performance of a communications system. The method includes: A first apparatus determines a first sequence and a second sequence based on a signal modulation scheme of to-be-sent data and a preconfigured sequence. The first sequence and the second sequence are Golay complementary sequences, and amplitude values of real parts and imaginary parts of elements in the first sequence and the second sequence are the same as amplitude values of real parts and/or imaginary parts of some elements in a sequence corresponding to the to-be-sent data. The first apparatus outputs a preamble sequence. The preamble sequence includes the first sequence and the second sequence.

A first apparatus determines a first sequence and a second sequence based on a signal modulation scheme of to-be-sent data and a preconfigured sequence, where amplitude values of real parts and imaginary parts of elements in the first sequence and the second sequence are the same as amplitude values of real parts and/or imaginary parts of some elements in a sequence corresponding to the to-be-sent data of the first apparatus — S501

↓

The first apparatus outputs a preamble sequence, where the preamble sequence includes the first sequence and the second sequence — S502

FIG. 5

## Description

This application claims priority to Chinese Patent Application No. 202010682134.1, filed with the China National Intellectual Property Administration on July 15, 2020 and entitled "DATA TRANSMISSION METHOD AND APPARATUS", which incorporated herein by reference in its entirety.

## TECHNICAL FIELD

This application relates to the field of communications technologies, and in particular, to a data transmission method and apparatus.

## BACKGROUND

With the evolution of communications networks, a transmit end in a 5th-generation (Sth-Generation, 5G) mobile communications system uses a higher frequency band, a larger bandwidth, and more antennas to implement data transmission at an ultra-high rate, for example, at a transmission rate of a level of 10 Gbit per second. Channel estimation at a receive end is a key technology for implementing a wireless communications system. In other words, whether the receive end can obtain relatively precise channel information and correctly obtain a transmitted signal through demodulation is an important indicator for measuring performance of the wireless communications system. Power consumption of an analog-to-digital converter (Analog-to-digital Converter, ADC) for converting an analog signal into a digital signal at the receive end increases exponentially with sampling precision of the ADC. Therefore, for a device such as a wireless earphone or a wearable device that has relatively low power consumption, how to achieve relatively precise channel estimation, signal synchronization, and the like by using an ADC with relatively low precision is a problem that currently needs to be addressed urgently.

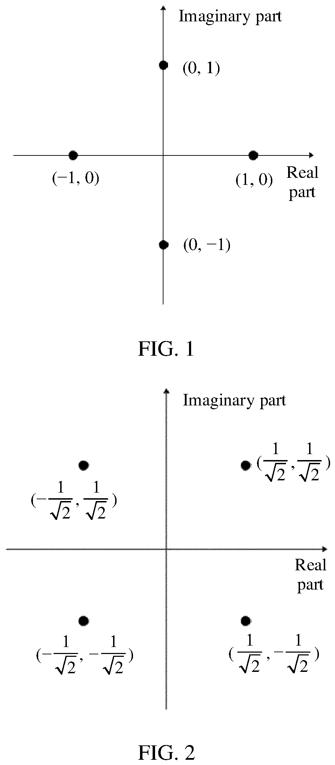

In a conventional technology, a transmit end may use Golay complementary sequences as a preamble sequence, and a receive end performs channel estimation based on the received preamble sequence. For example, in the IEEE 802.11ay standard, Golay complementary sequences with aperiodic autocorrelation are used as a preamble sequence. The preamble sequence includes { 1, -1 }, and a modulation scheme is $\pi/2$-binary phase shift keying (Binary Phase Shift Keying, BPSK) modulation. A constellation point of a modulated preamble sequence is located on a coordinate axis of a constellation diagram. The constellation point includes a real part and an imaginary part of the preamble sequence. For example, amplitude values of a real part and an imaginary part shown in FIG. 1 include {-1, 0, 1}. Then the transmit end sends the preamble sequence through a channel. The receive end performs an operation based on the received preamble sequence and a preconfigured sequence, thereby performing channel estimation and signal synchronization.

However, when a modulation scheme of data subsequently sent by the transmit end is 4-quadrature amplitude modulation (Quadrature Amplitude Modulation, QAM), such as a 4QAM constellation diagram shown in FIG. 2, it can be learned that in the foregoing technical solution, amplitude values of the preamble sequence sent by the transmit end are different from those of the sent data. In this case, to make signal power of the preamble sequence equal to signal power of the sent data, because signal power is in positive correlation to amplitude values of a sequence in a signal, the receive end needs to adjust the signal power based on amplitude values of the received preamble sequence to quantize the amplitude values into matching level values. Therefore, when the receive end uses a low-precision ADC, a relatively large quantization error may be introduced. For example, when the receive end uses a 1-bit ADC, the receive end quantizes a received signal into two level values {V, -V}. An amplitude value 0 of the preamble sequence may be randomly quantized into a level V or -V, resulting in relatively large quantization noise. This causes a decrease in channel estimation precision and a relatively large channel estimation error.

## SUMMARY

This application provides a data transmission method and apparatus, which can reduce a quantization error that occurs when a low-precision ADC processes a preamble sequence, thereby improving precision and accuracy of channel estimation of a device with low power consumption, and optimizing performance of a communications system.

To achieve the foregoing objective, the following technical solutions are used in this application.

According to a first aspect, a data transmission method is provided. The method includes: A first apparatus determines a first sequence and a second sequence based on a signal modulation scheme of to-be-sent data and a preconfigured sequence. The first sequence and the second sequence are Golay complementary sequences, and amplitude values of real parts and imaginary parts of elements in the first sequence and the second sequence are the same as amplitude values of real parts and/or imaginary parts of some elements in a sequence corresponding to the to-be-sent data. The first apparatus outputs a preamble sequence. The preamble sequence includes the first sequence and the second sequence.

In the foregoing technical solution, the first apparatus may determine the preamble sequence based on the signal modulation scheme of the to-be-sent data, so that amplitude values of real parts and imaginary parts of the preamble sequence sent by the transmit end are the same as the amplitude values of the real parts and/or the imaginary parts of some elements in the sequence corresponding to the to-be-sent data. In this way, after a receive end receives the preamble sequence, when converting an analog signal into a digital signal, a low-precision ADC at the receive end may quantize amplitude values of the preamble sequences and amplitude values of a received data part into closer values, thereby preventing a relatively large quantization error caused by a relatively large difference between the amplitude values of the preamble sequence and the amplitude values of the received data part. This can reduce a quantization error, thereby improving precision and accuracy of channel estimation of a device with low power consumption, and improving performance of a communications system.

In a possible design, the signal modulation scheme of the to-be-sent data includes 4-quadrature amplitude modulation QAM or 16QAM.

In the foregoing possible implementation, the signal modulation scheme of the to-be-sent data of the first apparatus may be 4QAM or 16QAM. A second apparatus may determine selection and design of the preamble sequence based on the modulation scheme, to make the amplitude values of the real parts and the imaginary parts of the preamble sequence fall within an amplitude value range of a signal obtained after 4QAM or 16QAM modulation. This reduces a quantization error of the low-precision ADC at the receive end, thereby improving channel estimation accuracy of a device with low power consumption.

In a possible design, when the signal modulation scheme of the to-be-sent data is 4QAM, the amplitude values of the real parts and the imaginary parts of the elements in the first sequence and the second sequence include $\sqrt{\dfrac{E}{2}}$ and $-\sqrt{\dfrac{E}{2}}$, where E represents signal power of the to-be-sent data.

In the foregoing possible implementation, amplitude values of a real part and an imaginary part of a digital signal obtained after 4QAM modulation include $\sqrt{\dfrac{E}{2}}$ and $-\sqrt{\dfrac{E}{2}}$. Therefore, the first apparatus may design the first sequence and the second sequence in the preamble sequence as follows: The amplitude values of the real parts and the imaginary parts of the elements are $\sqrt{\dfrac{E}{2}}$ and $-\sqrt{\dfrac{E}{2}}$, which are the same as amplitude values of a real part and an imaginary part of a data part. This can improve channel estimation accuracy of the receive end.

In a possible design, when the signal modulation scheme of the to-be-sent data is 16QAM, the amplitude values of the real parts and the imaginary parts of the elements in the first sequence and the second sequence include $\sqrt{\dfrac{E}{10}}, -\sqrt{\dfrac{E}{10}}, \dfrac{3\sqrt{E}}{\sqrt{10}}$, and $-\dfrac{3\sqrt{E}}{\sqrt{10}}$, where E represents signal power of the to-be-sent data.

In the foregoing possible implementation, amplitude values of a real part and an imaginary part of a digital signal obtained after 16QAM modulation include $\sqrt{\dfrac{E}{10}}, -\sqrt{\dfrac{E}{10}}, \dfrac{3\sqrt{E}}{\sqrt{10}}$, and $-\dfrac{3\sqrt{E}}{\sqrt{10}}$. Therefore, the first apparatus may design the first sequence and the second sequence in the preamble sequence as follows: The amplitude values of the real parts and the imaginary parts of the elements are $\sqrt{\dfrac{E}{10}}, -\sqrt{\dfrac{E}{10}}, \dfrac{3\sqrt{E}}{\sqrt{10}}$, and $-\dfrac{3\sqrt{E}}{\sqrt{10}}$, which are the same as amplitude values of a real part and an imaginary part of a data part. This can improve channel estimation accuracy of the receive end.

In a possible design, power of the preamble sequence is equal to the signal power of the to-be-sent data.

In the foregoing possible implementation, the transmit end needs to make the power of the preamble sequence equal to the signal power of the to-be-sent data. However, power of a digital signal is equal to a value obtained by dividing a quadratic sum of amplitude values of elements in a sequence corresponding to the digital signal by a quantity of elements in the sequence. Therefore, that the power of the preamble sequence of the first apparatus is equal to the signal power of the to-be-sent data represents: The amplitude values of the real parts and the imaginary parts of the preamble sequence of the first apparatus are the same as the amplitude values of the real parts and/or the imaginary parts of some elements in the sequence corresponding to the to-be-sent data.

In a possible design, when the signal modulation scheme of the to-be-sent data output by the first apparatus is 4QAM, that a first apparatus determines a first sequence and a second sequence based on a signal modulation scheme of to-be-sent data and a preconfigured sequence specifically includes: The first apparatus obtains the first sequence and the second sequence after performing $\frac{\pi}{2}$ binary phase shift keying BPSK modulation and $\frac{k\pi}{4}$ phase shifting separately on a preconfigured third sequence and fourth sequence, where k is an odd number, and the third sequence and the fourth sequence are Golay complementary sequences.

In the foregoing possible implementation, when the signal modulation scheme of the to-be-sent data output by the first apparatus is 4QAM, a constellation diagram may be shown in FIG. 2. Therefore, the first apparatus may perform - BPSK modulation and - phase shifting on an original preamble sequence shown in FIG. 1, that is, modulate constellation points to 4QAM constellation point locations shown in FIG. 2, so that the amplitude values of the real parts and the imaginary parts of the preamble sequence output by the first apparatus are the same as the amplitude values of the real parts and/or the imaginary parts of some elements in the sequence corresponding to the to-be-sent data. This can improve channel estimation accuracy of the receive end.

In a possible design, the $n^{th}$ element in the first sequence meets the following formula:

$$A_n = a_n * \exp[\frac{j\pi(n-1)}{2} + \frac{jk\pi}{4}] ;$$

and the $n^{th}$ element in the second sequence meets the following formula:

$$B_n = b_n * \exp[\frac{j\pi(n-1)}{2} + \frac{jk\pi}{4}] ,$$

where $A_n$ represents the $n^{th}$ element in the first sequence, $B_n$ represents the $n^{th}$ element in the second sequence, $a_n$ represents the $n^{th}$ element in the third sequence, and $b_n$ represents the $n^{th}$ element in the fourth sequence.

In the foregoing possible implementation, the first apparatus may perform an adjustment operation on preconfigured original Golay complementary sequences based on the foregoing formulas to obtain a first sequence and a second sequence that meet 4QAM constellation point locations, and use the first sequence and the second sequence as the preamble sequence. This can improve channel estimation accuracy of the receive end.

In a possible design, when the signal modulation scheme of the to-be-sent data output by the first apparatus is 4QAM, that a first apparatus determines a first sequence and a second sequence based on a signal modulation scheme of to-be-sent data and a preconfigured sequence specifically includes: The first apparatus obtains the first sequence and the second sequence after performing $\frac{k\pi}{4}$ phase shifting separately on a preconfigured third sequence and fourth sequence, where k is an odd number, and the third sequence and the fourth sequence are Golay complementary sequences.

In the foregoing possible implementation, the first apparatus may further perform $\frac{k\pi}{4}$ phase shifting on original Golay complementary sequences to obtain a 4QAM constellation diagram shown in FIG. 2. In this way, the amplitude values of the real parts and the imaginary parts of the preamble sequence output by the first apparatus are the same as the amplitude values of the real parts and/or the imaginary parts of some elements in the sequence corresponding to the to-be-sent data. This can improve channel estimation accuracy of the receive end.

In a possible design, the $n^{th}$ element in the first sequence meets the following formula:

$$A_n = a_n * \exp\left(\frac{jk\pi}{4}\right);$$

and the $n^{th}$ element in the second sequence meets the following formula:

$$B_n = b_n * \exp\left(\frac{jk\pi}{4}\right),$$

where $A_n$ represents the $n^{th}$ element in the first sequence, $B_n$ represents the $n^{th}$ element in the second sequence, $a_n$ represents the $n^{th}$ element in the third sequence, and $b_n$ represents the $n^{th}$ element in the fourth sequence.

In the foregoing possible implementation, the first apparatus may perform an adjustment operation on preconfigured original Golay complementary sequences based on the foregoing formulas to obtain a first sequence and a second sequence that meet 4QAM constellation point locations, and use the first sequence and the second sequence as the preamble sequence. This can improve channel estimation accuracy of the receive end.

In a possible design, when the signal modulation scheme of the to-be-sent data is 4QAM or 16QAM, that a first apparatus determines a first sequence and a second sequence based on a signal modulation scheme of to-be-sent data and a preconfigured sequence specifically includes: The first apparatus obtains the first sequence by performing an operation based on a preconfigured third sequence and fourth sequence, and the first apparatus obtains the second sequence by performing an operation based on the preconfigured third sequence and fourth sequence, where the third sequence and the fourth sequence are Golay complementary sequences.

In the foregoing possible implementation, the first apparatus may obtain the first sequence and the second sequence by performing a joint operation on the preconfigured third sequence and fourth sequence. In this way, the amplitude values of the real parts and the imaginary parts of the preamble sequence output by the first apparatus are the same as the amplitude values of the real parts and/or the imaginary parts of some elements in the sequence corresponding to the to-be-sent data. This can improve channel estimation accuracy of the receive end.

In a possible design, when the signal modulation scheme of the to-be-sent data is 4QAM, the $n^{th}$ element in the first sequence meets the following formula:

$$A_n = \frac{1}{\sqrt{2}}(a_n + jb_n) * \exp\left(\frac{jk\pi}{2}\right);$$

and the $n^{th}$ element in the second sequence meets the following formula:

$$B_n = \frac{1}{\sqrt{2}}(a_n - jb_n) * \exp\left(\frac{jk\pi}{2}\right),$$

where $A_n$ represents the $n^{th}$ element in the first sequence, $B_n$ represents the $n^{th}$ element in the second sequence, $a_n$ represents the $n^{th}$ element in the third sequence, $b_n$ represents the $n^{th}$ element in the fourth sequence, and k is an integer.

In the foregoing possible implementation, the first apparatus may perform an adjustment operation on preconfigured original Golay complementary sequences based on the foregoing formulas to obtain a first sequence and a second sequence that meet 4QAM constellation point locations, and use the first sequence and the second sequence as the preamble sequence. This can improve channel estimation accuracy of the receive end.

In a possible design, when the signal modulation scheme of the to-be-sent data is 16QAM, the $n^{th}$ element in the first sequence meets the following formula:

$$A_n = \frac{1}{\sqrt{10}}(2a_n + 2ja_n + b_n - jb_n)\exp\left(\frac{jk\pi}{2}\right);$$

and the $n^{th}$ element in the second sequence meets the following formula:

$$B_n = \frac{1}{\sqrt{10}}(2b_n + 2jb_n + a_n - ja_n)\exp\left(\frac{jk\pi}{2}\right),$$

where $A_n$ represents the $n^{th}$ element in the first sequence, $B_n$ represents the $n^{th}$ element in the second sequence, $a_n$ represents the $n^{th}$ element in the third sequence, $b_n$ represents the $n^{th}$ element in the fourth sequence, and k is an integer.

In the foregoing possible implementation, the first apparatus may perform an adjustment operation on preconfigured original Golay complementary sequences based on the foregoing formulas to obtain a first sequence and a second sequence that meet 16QAM constellation point locations, and use the first sequence and the second sequence as the preamble sequence. This can improve channel estimation accuracy of the receive end.

In a possible design, the third sequence and the fourth sequence include elements 1 and -1 that are arranged in a preset order.

According to a second aspect, a data transmission method is provided. The method includes: A second apparatus receives a preamble sequence. The second apparatus performs blind detection on the preamble sequence, and determines a first sequence and a second sequence from a plurality of preconfigured sequences based on the preamble sequence, where the first sequence and the second sequence are preconfigured Golay complementary sequences. The second apparatus performs channel estimation based on the first sequence, the second sequence, and the preamble sequence.

In the foregoing technical solution, after receiving a preamble sequence, a receive end may perform blind detection based on the received preamble sequence and a plurality of locally preconfigured sequences, to determine an original preamble sequence sent by a transmit end. For example, the original preamble sequence includes a first sequence and a second sequence. Then the receive end may perform channel estimation based on the received preamble sequence, the first sequence, and the second sequence, thereby improving channel estimation accuracy of the receive end.

In a possible design, that the second apparatus performs blind detection on the preamble sequence, and determines a first sequence and a second sequence from a plurality of preconfigured sequences based on the preamble sequence specifically includes: The preamble sequence includes a third sequence and a fourth sequence. The second apparatus performs a cross-correlation operation between the third sequence and each of the plurality of preconfigured sequences, and/or the second apparatus performs a cross-correlation operation between the fourth sequence and each of the plurality of preconfigured sequences, to obtain a plurality of correlation sequences. The second apparatus determines the first sequence and the second sequence based on the plurality of correlation sequences.

In the foregoing possible implementation, the second apparatus performs a cross-correlation operation between the preamble sequence and the preconfigured sequences one by one, and determines, based on a cross-correlation property of Golay sequences, a sequence pair with a highest degree of correlation as the first sequence and the second sequence.

In a possible design, if a correlation sequence obtained by adding up a correlation sequence that is obtained by performing a cross-correlation operation between the third sequence and a preconfigured sequence 1 and a correlation sequence that is obtained by performing a cross-correlation operation between the fourth sequence and a preconfigured sequence 2 has a highest degree of correlation, the second apparatus determines that the preconfigured sequence 1 and the preconfigured sequence 2 are respectively the first sequence and the second sequence, where the preconfigured sequence 1 and the preconfigured sequence 2 are among the plurality of preconfigured sequences.

In a possible design, that the second apparatus performs channel estimation based on the first sequence, the second sequence, and the preamble sequence specifically includes: The preamble sequence includes the third sequence and the fourth sequence. The second apparatus performs a cross-correlation operation between the first sequence and the third sequence to obtain a fifth sequence, and the second apparatus performs a cross-correlation operation between the second sequence and the fourth sequence to obtain a sixth sequence. The second apparatus obtains, based on the fifth sequence, the sixth sequence, and a quantity of elements in the third sequence, a channel parameter sequence for data transmission between a first apparatus and the second apparatus.

In the foregoing possible implementation, based on a cross-correlation property of Golay complementary sequences, the second apparatus may calculate the channel parameter sequence based on the received preamble sequence and the original preamble sequence sent by the transmit end. Amplitude values of a real part and/or an imaginary part of the preamble sequence sent by the transmit end are the same as those of a real part and/or an imaginary part of a data part. Therefore, a channel parameter obtained by the receive end based on the preamble sequence is basically the same as a channel parameter obtained based on the data part, and a device with low power consumption does not produce a relatively large error because of quantization of a digital signal. This improves channel estimation accuracy and also accordingly improves performance of a communications system.

In a possible design, the $n^{th}$ element $H_n$ in the channel parameter sequence meets the following formula:

$$H_n = \frac{A'_n \otimes C_n + B'_n \otimes D_n}{2N}$$

, where $A_n{}'$ represents the $n^{th}$ element in the third sequence, $C_n$ represents the $n^{th}$ element in the first sequence, $D_n$ represents the $n^{th}$ element in the second sequence, $B_n{}'$ represents the $n^{th}$ element in the fourth sequence, N represents the quantity of elements in the third sequence, and $\otimes$ represents the cross-correlation operation.

According to a third aspect, a data transmission apparatus is provided. The apparatus includes: a processing module, configured to determine a first sequence and a second sequence based on a signal modulation scheme of to-be-sent data and a preconfigured sequence, where the first sequence and the second sequence are Golay complementary sequences, and amplitude values of real parts and imaginary parts of elements in the first sequence and the second sequence are the same as amplitude values of real parts and/or imaginary parts of some elements in a sequence corresponding to the to-be-sent data; and an output module, configured to output a preamble sequence, where the preamble sequence includes the first sequence and the second sequence.

In a possible design, the signal modulation scheme of the to-be-sent data includes 4-quadrature amplitude modulation QAM or 16QAM.

In a possible design, when the signal modulation scheme of the to-be-sent data is 4QAM, the amplitude values of the real parts and the imaginary parts of the elements in the first sequence and the second sequence include $\sqrt{\dfrac{E}{2}}$ and $-\sqrt{\dfrac{E}{2}}$, where E represents signal power of the to-be-sent data.

In a possible design, when the signal modulation scheme of the to-be-sent data is 16QAM, the amplitude values of the real parts and the imaginary parts of the elements in the first sequence and the second sequence include $\sqrt{\dfrac{E}{10}}, -\sqrt{\dfrac{E}{10}}, \dfrac{3\sqrt{E}}{\sqrt{10}}$, and $-\dfrac{3\sqrt{E}}{\sqrt{10}}$, where E represents signal power of the to-be-sent data.

In a possible design, power of the preamble sequence is equal to the signal power of the to-be-sent data.

In a possible design, when the signal modulation scheme of the to-be-sent data output by the first apparatus is 4QAM, that the first apparatus determines a first sequence and a second sequence based on a signal modulation scheme of to-be-sent data and a preconfigured sequence specifically includes: The first apparatus obtains the first sequence and the second sequence after performing $\dfrac{\pi}{2}$ binary phase shift keying BPSK modulation and $\dfrac{k\pi}{4}$ phase shifting separately on a preconfigured third sequence and fourth sequence, where k is an odd number, and the third sequence and the fourth sequence are Golay complementary sequences.

In a possible design, when the signal modulation scheme of the to-be-sent data output by the first apparatus is 4QAM, that the first apparatus determines a first sequence and a second sequence based on a signal modulation scheme of to-be-sent data and a preconfigured sequence specifically includes: The first apparatus obtains the first sequence and the second sequence after performing $\dfrac{k\pi}{4}$ phase shifting separately on a preconfigured third sequence and fourth sequence, where k is an odd number, and the third sequence and the fourth sequence are Golay complementary sequences.

In a possible design, when the signal modulation scheme of the to-be-sent data is 4QAM or 16QAM, that the first apparatus determines a first sequence and a second sequence based on a signal modulation scheme of to-be-sent data and a preconfigured sequence specifically includes: The first apparatus obtains the first sequence by performing an operation based on a preconfigured third sequence and fourth sequence, and the first apparatus obtains the second sequence by performing an operation based on the preconfigured third sequence and fourth sequence, where the third sequence and the fourth sequence are Golay complementary sequences.

In a possible design, the third sequence and the fourth sequence include elements 1 and -1 that are arranged in a preset order.

According to a fourth aspect, a data transmission apparatus is provided. The apparatus includes: a receiving module, configured to receive a preamble sequence; and a processing module, configured to perform blind detection on the preamble sequence, and determine a first sequence and a second sequence from a plurality of preconfigured sequences based on the preamble sequence, where the first sequence and the second sequence are preconfigured Golay complementary sequences. The processing module is further configured to perform channel estimation based on the first sequence, the second sequence, and the preamble sequence.

In a possible design, that the second apparatus performs blind detection on the preamble sequence, and determines a first sequence and a second sequence from a plurality of preconfigured sequences based on the preamble sequence specifically includes: The preamble sequence includes a third sequence and a fourth sequence. The second apparatus performs a cross-correlation operation between the third sequence and each of the plurality of preconfigured sequences, and/or the second apparatus performs a cross-correlation operation between the fourth sequence and each of the plurality of preconfigured sequences, to obtain a plurality of correlation sequences. The second apparatus determines the first sequence and the second sequence based on the plurality of correlation sequences.

In a possible design, if a correlation sequence obtained by adding up a correlation sequence that is obtained by performing a cross-correlation operation between the third sequence and a preconfigured sequence 1 and a correlation sequence that is obtained by performing a cross-correlation operation between the fourth sequence and a preconfigured sequence 2 has a highest degree of correlation, the second apparatus determines that the preconfigured sequence 1 and the preconfigured sequence 2 are respectively the first sequence and the second sequence, where the preconfigured sequence 1 and the preconfigured sequence 2 are among the plurality of preconfigured sequences.

In a possible design, that the second apparatus performs channel estimation based on the first sequence, the second sequence, and the preamble sequence specifically includes: The preamble sequence includes the third sequence and the fourth sequence. The second apparatus performs a cross-correlation operation between the first sequence and the third sequence to obtain a fifth sequence, and the second apparatus performs a cross-correlation operation between the second sequence and the fourth sequence to obtain a sixth sequence. The second apparatus obtains, based on the fifth sequence, the sixth sequence, and a quantity of elements in the third sequence, a channel parameter sequence for data transmission between a first apparatus and the second apparatus.

In a possible design, the $n^{th}$ element $H_n$ in the channel parameter sequence meets the following formula:

$$H_n = \frac{A_n' \otimes C_n + B_n' \otimes D_n}{2N}$$

, where $A_n'$ represents the $n^{th}$ element in the third sequence, $C_n$ represents the $n^{th}$ element in the first sequence, $D_n$ represents the $n^{th}$ element in the second sequence, $B_n'$ represents the $n^{th}$ element in the fourth sequence, N represents the quantity of elements in the third sequence, and $\otimes$ represents the cross-correlation operation.

According to a fifth aspect, an electronic device is provided. The electronic device includes a processor and a transmission interface. The processor is configured to execute instructions stored in a memory, to implement the method according to any one of the possible designs of the first aspect.

According to a sixth aspect, an electronic device is provided. The electronic device includes a processor and a transmission interface. The processor is configured to execute instructions stored in a memory, to implement the method according to any one of the possible designs of the second aspect.

According to a seventh aspect, a computer-readable storage medium is provided. The computer-readable storage medium stores instructions. When the instructions are executed by a computer or a processor, the computer or the processor is enabled to perform the method according to any one of the possible designs of the first aspect.

According to an eighth aspect, a computer-readable storage medium is provided. The computer-readable storage medium stores instructions. When the instructions are executed by a computer or a processor, the computer or the processor is enabled to perform the method according to any one of the possible designs of the second aspect.

According to a ninth aspect, a computer program product is provided. The computer program product may include program instructions. When the computer program product is run on a computer, the computer is enabled to perform the method according to any one of the possible designs of the first aspect.

According to a tenth aspect, a computer program product is provided. The computer program product may include program instructions. When the computer program product is run on a computer, the computer is enabled to perform the method according to any one of the possible designs of the second aspect.

According to an eleventh aspect, a communications system is provided. The communications system includes the apparatus according to the third aspect and the apparatus according to the fourth aspect.

It can be understood that any of the data transmission apparatus, electronic device, computer-readable storage medium, and computer program product provided above can be configured to perform the corresponding method provided above. Therefore, for beneficial effects that can be achieved by the data transmission apparatus, electronic device, computer-readable storage medium, and computer program product, refer to the beneficial effects in the corresponding method provided above. Details are not described herein again.

## BRIEF DESCRIPTION OF DRAWINGS

FIG. 1 is a schematic diagram of constellation point locations of a preamble sequence according to an embodiment of this application;

FIG. 2 is a schematic diagram of constellation point locations of a data part in a 4QAM modulation scheme according to an embodiment of this application;

FIG. 3 is a schematic diagram of an architecture of a communications system according to an embodiment of this application;

FIG. 4 is a schematic diagram of a result of a cross-correlation operation on Golay complementary sequences according to an embodiment of this application;

FIG. 5 is a schematic flowchart of a data transmission method according to an embodiment of this application;

FIG. 6 is a schematic diagram of constellation point locations of a data part in a 16QAM modulation scheme according to an embodiment of this application;

FIG. 7 is a schematic flowchart of another data transmission method according to an embodiment of this application;

FIG. 8 is a schematic diagram of a structure of a data transmission apparatus according to an embodiment of this application;

FIG. 9 is a schematic diagram of a structure of another data transmission apparatus according to an embodiment of this application;

FIG. 10 is a schematic diagram of a structure of an electronic device according to an embodiment of this application; and

FIG. 11 is a schematic diagram of a structure of a chip system according to an embodiment of this application.

## DESCRIPTION OF EMBODIMENTS

The terms "first" and "second" mentioned below are merely intended for a purpose of description, and shall not be understood as an indication or implication of relative importance or implicit indication of a quantity of indicated technical features. Therefore, a feature limited by "first " or "second" may explicitly indicate or implicitly include one or more such features. In the description of embodiments, unless otherwise stated, "a plurality of" means two or more than two.

It should be noted that, in embodiments of this application, the term such as "example" or "for example" is used to represent giving an example, an illustration, or descriptions. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, an implementation environment and an application scenario of embodiments of this application are briefly described.

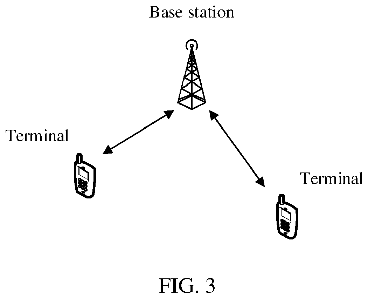

This application may be applied to a wireless communications system such as 5G or satellite communications. A system architecture is shown in FIG. 3. The system may include a base station and at least one terminal.

It should be noted that the wireless communications system usually may include cells, and each cell may include a base station (Base Station, BS). The base station provides a communications service to a plurality of mobile stations (Mobile Station, MS). The base station includes a baseband unit (Baseband Unit, BBU) and a remote radio unit (Remote Radio Unit, RRU). The BBU and the RRU may be placed at different locations. For example, the RRU is disposed remotely and placed in a region with heavy traffic, and the BBU is placed in a central equipment room. Alternatively, the BBU and the RRU may be placed in the same equipment room. In addition, the BBU and the RRU may alternatively be different components on the same rack.

The wireless communications system mentioned in solutions of the present invention includes but is not limited to a narrowband Internet of things system (Narrow Band- Internet of Things, NB-IoT), a global system for mobile communications (Global System for Mobile Communications, GSM), an enhanced data rates for GSM evolution (Enhanced Data rate for GSM Evolution, EDGE) system, a wideband code division multiple access (Wideband Code Division Multiple Access, WCDMA) system, a system of code division multiple access 2000 (Code Division Multiple Access, CDMA2000), time division-synchronous code division multiple access (Time Division-Synchronization Code Division Multiple Access, TD-SCDMA) system, a Long Term Evolution system (Long Term Evolution, LTE) system, three application scenarios eMBB, URLLC, and eMTC of a next-generation 5G mobile communications system, and a wireless fidelity (Wireless Fidelity, Wi-Fi) system.

In this application, the base station is an apparatus that is deployed in a radio access network and that provides a wireless communications function for an MS, and may include various forms of macro base stations, micro base stations (also known as small cells), repeater stations, access points, and the like. In systems that use different radio access technologies, names of a device that has a base station function may be different. For example, in an LTE system, the device is referred to as an evolved NodeB (evolved NodeB, eNB or eNodeB), and in a 3rd generation (3rd Generation, 3G) system, the device is referred to as a NodeB (Node B, NB). For ease of description, in all embodiments of this application, all the foregoing apparatuses that provide a wireless communications function for the MS are referred to as a network device or a base station or a BS.

Terminals included in embodiments of this application may include various handheld devices, vehiclemounted devices, wearable devices, or computing devices that have a wireless communications function, or other processing devices connected to a wireless modem. The terminal may specifically be a subscriber unit (subscriber unit), a cellular phone (cellular phone), a smartphone (smartphone), a wireless data card, a personal digital assistant (Personal Digital Assistant, PDA) computer, a tablet computer, a wireless modem, a handheld device, a laptop computer (laptop computer), a machine type communications (machine type communications, MTC) terminal, or the like.

Based on the foregoing communications system, before the base station sends data to the terminal, the base station first sends a preamble sequence, so that the terminal may adjust automatic gain control (Automatic Gain Control, AGC) based on the received preamble sequence and perform channel estimation and signal synchronization based on the preamble sequence. Specifically, the terminal may adjust AGC based on the received preamble sequence and perform quantization to obtain a corresponding level value. In addition, the terminal may calculate a correlation function based on the received preamble sequence and a preconfigured sequence, thereby obtaining, based on the correlation function, a channel parameter for communication. Then the terminal can correctly obtain a transmit signal through demodulation based on the channel parameter, thereby implementing efficient and precise communication.

AGC serves to adjust analog signals with different strength by using different gains, so that amplitudes of finally output signals are maintained at the same standard. Specifically, in AGC, a signal amplitude may be detected to adaptively control a gain of a signal link. When a signal amplitude of a circuit changes, an amplitude of an output signal of the circuit can be adjusted to a stable value through AGC.

In a conventional technology, usually a Golay sequence may be used as a preamble sequence. For example, the preamble sequence may include two complementary Golay sequences that are sent alternately. A Golay sequence may be a sequence with a specific length and an autocorrelation property. For example, the Golay sequence may be a sequence including elements 1 and -1. In an existing communications system, a Golay sequence with a length of 32 bits, 64 bits, 128 bits, 256 bits, or 512 bits is usually used.

For example, 32-bit Golay complementary sequences may be as follows:

$$a_{32} = [1, 1, -1, 1, -1, 1, 1, 1, -1, -1, 1, -1, -1, 1, 1, 1, -1, -1, 1, -1, 1, -1, -1, -1, -1, -1, 1, -1, -1, 1, 1,$$

$$1];$$

and

$$b_{32} = [-1, -1, 1, -1, 1, -1, -1, -1, 1, 1, -1, 1, 1, -1, -1, -1, -1, -1, 1, -1, 1, -1, -1, -1, -1, -1, 1, -1, -1, 1,$$

$$1, 1].$$

For example, 64-bit Golay complementary sequences may be as follows:

$$a_{64} = [-1, -1, 1, -1, 1, -1, -1, -1, 1, 1, -1, 1, 1, -1, -1, -1, -1, -1, 1, -1, 1, -1, -1, -1, -1, -1, 1, -1, -1, 1,$$

$$1, 1, -1, -1, 1, -1, 1, -1, -1, -1, 1, 1, -1, 1, 1, -1, -1, -1, 1, 1, -1, 1, -1, 1, 1, 1, 1, 1, -1, 1, 1, -1, -1, -1];$$

and

$$b_{64} = [1, 1, -1, 1, -1, 1, 1, 1, -1, -1, 1, -1, -1, 1, 1, 1, 1, 1, -1, 1, -1, 1, 1, 1, 1, 1, -1, 1, 1, -1, -1, -1, -1, -$$

$$1, 1, -1, 1, -1, -1, -1, 1, 1, -1, 1, 1, -1, -1, -1, 1, 1, -1, 1, -1, 1, 1, 1, 1, 1, -1, 1, 1, -1, -1, -1].$$

For example, 128-bit Golay complementary sequences may be as follows:

$$a_{128} = [1, 1, -1, -1, -1, -1, -1, -1, -1, 1, -1, 1, 1, -1, -1, 1, 1, 1, -1, -1, 1, 1, 1, 1, -1, 1, -1, 1, -1, 1, 1, -$$

$$1, -1, -1, 1, 1, 1, 1, 1, 1, 1, -1, 1, -1, -1, 1, 1, -1, 1, 1, -1, -1, 1, 1, 1, 1, -1, 1, -1, 1, -1, 1, 1, -1, 1, 1, -1, -1, -1, -1,$$

$$-1, -1, -1, 1, -1, 1, 1, -1, -1, 1, 1, 1, -1, -1, 1, 1, 1, 1, -1, 1, -1, 1, -1, 1, 1, -1, 1, 1, -1, -1, -1, -1, -1, -1, -1, 1, -1,$$

$$1, 1, -1, -1, 1, -1, -1, 1, 1, -1, -1, -1, -1, 1, -1, 1, -1, 1, -1, -1, 1];$$

and

$$b_{128} = [-1, -1, 1, 1, 1, 1, 1, 1, 1, -1, 1, -1, -1, 1, 1, -1, -1, -1, 1, 1, -1, -1, -1, -1, 1, -1, 1, -1, 1, -1, -1, 1,$$

$$1, 1, -1, -1, -1, -1, -1, -1, -1, 1, -1, 1, 1, -1, -1, 1, -1, -1, 1, 1, -1, -1, -1, -1, 1, -1, 1, -1, 1, -1, -1, 1, 1, 1, -1, -1,$$

$$-1, -1, -1, -1, -1, 1, -1, 1, 1, -1, -1, 1, 1, 1, -1, -1, 1, 1, 1, 1, -1, 1, -1, 1, -1, 1, 1, -1, 1, 1, -1, -1, -1, -1, -1, -1, -$$

$$1, 1, -1, 1, 1, -1, -1, 1, -1, -1, 1, 1, -1, -1, -1, -1, 1, -1, 1, -1, 1, -1, -1, 1].$$

It should be noted that the foregoing Golay complementary sequences are merely several example forms that are commonly used. This is not limited in this application. A person skilled in the art can design Golay complementary sequences based on a design requirement of a communications system.

A Golay sequence has an ideal aperiodic autocorrelation property. For example, Golay sequences are a sequence $a_N$ and a sequence $b_N$. Then the $i^{th}$ element $a(i)$ in the sequence $a_N$ and the $i^{th}$ element $b(i)$ in the sequence $b_N$ meet the following formulas:

$$R_{ab}(k) = R_a(k) + R_b(k) = 2N\delta(k) \qquad \text{Formula (1)}$$

$$R_a(k) = \sum_{i=0}^{N-1-k} a(i+k)a^*(i) \qquad \text{Formula (2)}$$

$$R_b(k) = \sum_{i=0}^{N-1-k} b(i+k)b^*(i) \qquad \text{Formula (3)}$$

$$\delta(k) = 1, \quad k = 0$$

$$\delta(k) = 0, \quad k \neq 0$$

In the formulas, $R_a(k)$ represents a correlation sequence obtained by performing an autocorrelation operation on the sequence $a_N$, $R_b(k)$ represents a correlation sequence obtained by performing an autocorrelation operation on the sequence $b_N$, $R_{ab}(k)$ represents a correlation sequence obtained by adding up correlation sequences $R_a(k)$ and $R_b(k)$, N represents a sequence length of the sequence $a_N$ and the sequence $b_N$, namely, a quantity of elements in the sequence $a_N$ and the sequence $b_N$, $a^*(i)$ represents the $i^{th}$ element of a conjugate sequence of the sequence $a_N$, and $b^*(i)$ represents the $i^{th}$ element of a conjugate sequence of the sequence $b_N$.

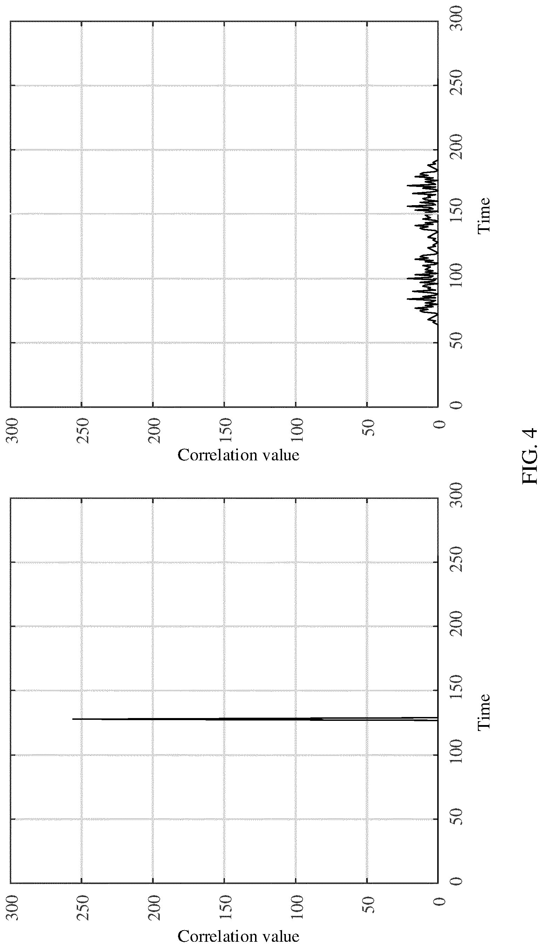

For example, as shown in FIG. 4, an autocorrelation sequence of Golay complementary sequences that have an autocorrelation property may be shown in a left picture in FIG. 4, which includes an obvious peak value, for example, an impulse-like peak. However, a correlation sequence obtained by performing a cross-correlation operation between the sequence and another sequence may be shown in a right picture in FIG. 4, which does not have an obvious peak value. Therefore, the ideal autocorrelation property of a Golay sequence determines that the Golay sequence can be used for precise time-domain channel estimation. Currently, in the IEEE 802.11ay standard, a Golay sequence is used as a preamble sequence for time-domain channel estimation.

The embodiments of this application provide a data transmission method, which is applied to communications between a first apparatus and a second apparatus. The first apparatus may be a transmit end, and the second apparatus may be a receive end. Alternatively, the first apparatus may be a processing chip of a transmit-end device, and the second apparatus may be a processing chip of a receive-end device. This is not specifically limited in this application. The first apparatus may generate Golay complementary sequences as a preamble sequence and send the preamble sequence to the second apparatus. An amplitude value of the preamble sequence is kept consistent with an amplitude value of data subsequently sent by the first apparatus. In this way, when the receive end uses a low-precision ADC, no relatively large quantization error is generated, thereby improving channel estimation precision and accuracy.

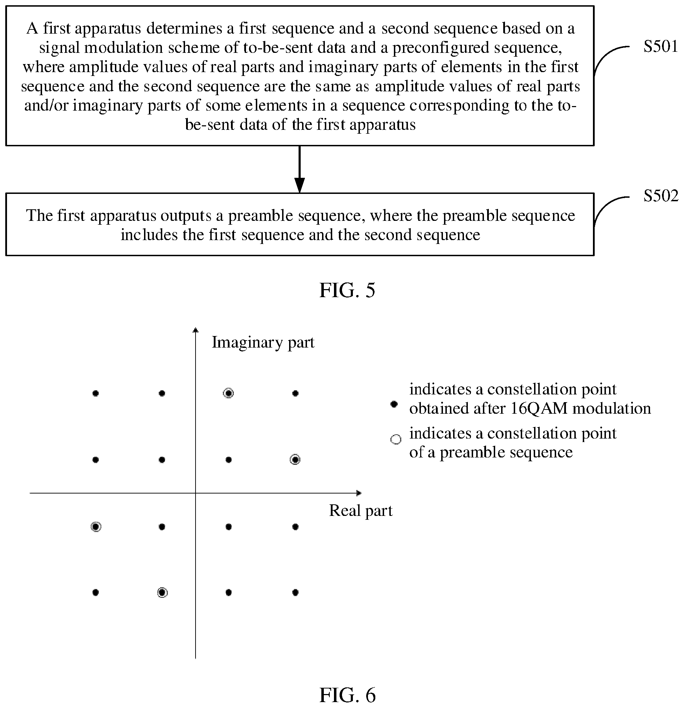

First, the data transmission method provided in embodiments of this application is described from a perspective of a transmit end. The method may be applied to a first apparatus. As shown in FIG. 5, the method may include the following steps.

S501: The first apparatus determines a first sequence and a second sequence based on a signal modulation scheme of to-be-sent data and a preconfigured sequence, where amplitude values of real parts and imaginary parts of elements in the first sequence and the second sequence are the same as amplitude values of real parts and/or imaginary parts of some elements in a sequence corresponding to the to-be-sent data of the first apparatus.

The to-be-sent data is data to be subsequently output by the first apparatus after the first apparatus outputs a preamble sequence. The data may include configuration data, service data, or the like, and is load data, namely, a payload, transmitted for communications between the first apparatus and a second apparatus. Specifically, the to-be-sent data may be a digital signal generated after the first apparatus performs digital encoding and modulation on the configuration data or the service data. The digital signal may be a complex number sequence that includes complex number elements.

Therefore, the sequence corresponding to the to-be-sent data of the first apparatus is related to an encoding mode and the signal modulation scheme of the to-be-sent data. In other words, the sequence corresponding to the to-be-sent data varies with the signal modulation scheme, and the sequence corresponding to the to-be-sent data varies with the encoding mode. In subsequent embodiments, schematic diagrams of constellation points of the sequence corresponding to the to-be-sent data in different signal modulation schemes are described as examples. Details are not described herein.

It should be noted that, to ensure an effect of communications between the first apparatus and the second apparatus and resolve a problem related to long-distance signal transmission, the first apparatus needs to move, through modulation, a signal spectrum to a high-frequency channel for transmission. Therefore, a process of loading a to-be-sent signal to a high-frequency signal is referred to as modulation. In actual application, usually three most basic modulation methods are available for both an analog signal and a digital signal: amplitude modulation, frequency modulation, and phase modulation.

In this application, considering a processing capability of a low-precision ADC configured at a receive end, the signal modulation scheme provided by the first apparatus for the to-be-sent data may specifically be an amplitude modulation technology for the data, which may include, for example, 4-quadrature amplitude modulation (QAM, Quadrature Amplitude Modulation) modulation, 8QAM, and 16QAM. FIG. 2 is an illustration of constellation points, in a constellation diagram, of the sequence of the to-be-sent data obtained after 4QAM modulation.

It should be noted that in actual application, a data part signal may usually be modulated by using 4QAM or 16QAM. Therefore, in following embodiments of this application, the modulation scheme 4QAM or 16QAM may be used as an example, to describe in detail a specific method for designing a preamble sequence in embodiments of this application. However, this does not constitute a limitation on the protection scope of this application. In other words, in embodiments of this application, a specific modulation scheme for a data part is not specifically limited, which is not repeatedly explained again below.

It can be learned that, in the field of digital communications, a digital signal may usually be represented by using a complex number, namely, $a(i) = a_0 + ja_1 = a^*e^{j\pi\theta}$, where $a_0$ represents a real part of the digital signal, $a_1$, represents an imaginary part of the digital signal, $a$ represents an amplitude of the digital signal, and $\theta$ represents a phase of the digital signal.

Usually, a person skilled in the art may use a complex number sequence to represent a digital signal. The sequence includes a plurality of complex number elements, and each complex number element may be mapped to coordinates of a constellation point in a constellation diagram. Therefore, a constellation diagram serves as a schematic diagram that visually represents a digital signal in the field of digital communications. In other words, a relationship between signals is visually represented on a complex plane. The constellation diagram can completely and clearly express a mapping relationship in digital modulation. The sequence corresponding to the to-be-sent data is a complex number sequence corresponding to a to-be-sent payload.

As shown in FIG. 1, a constellation diagram is coordinates, including a lateral coordinate I and a longitudinal coordinate Q. A distance between a constellation point corresponding to a digital signal and an origin O of the coordinate represents an amplitude $a$ of the digital signal, and an angle between the lateral coordinate I and a line connecting the constellation point corresponding to the digital signal to the origin O of the coordinate represents a phase $\theta$ of the digital signal. Correspondingly, a component that is of the digital signal and that is projected onto the axis I is an amplitude value of a real part of the digital signal, which is also referred to as an inphase component, and a component that is of the digital signal and that is projected onto the axis Q is an amplitude value of an imaginary part of the digital signal, which is also referred to as a quadrature component. Specifically, a quantity of digital signals obtained after 4QAM modulation is 4, which equals the square of 2. Therefore, two binary bits are required to represent each digital signal. The four digital signals fall within a unit circle and are constellation points. A location of a constellation point varies with an amplitude and a phase. Bit information of a digital signal is modulated to a location of a corresponding constellation point by using a specific signal modulation scheme.

The first apparatus may determine the first sequence and the second sequence based on the signal modulation scheme of the to-be-sent data and the preconfigured sequence. The first sequence and the second sequence are Golay complementary sequences. In other words, the sum of an autocorrelation sequence of the first sequence and an autocorrelation sequence of the second sequence assumes a relatively high correlation.

It should be noted that the first apparatus may directly determine the first sequence and the second sequence from a plurality of groups of preconfigured Golay complementary sequences based on the signal modulation scheme of the to-be-sent data. Alternatively, the first apparatus may generate the first sequence and the second sequence based on the signal modulation scheme of the to-be-sent data and preconfigured original Golay complementary sequences.

For example, original Golay complementary sequences are preconfigured in the first apparatus. When determining that the signal modulation scheme of the to-be-sent data is a scheme 1, the first apparatus may process the original Golay sequences based on an algorithm 1, to obtain the first sequence and the second sequence. In this way, the first apparatus may transmit the first sequence and the second sequence as the preamble sequence for channel estimation. When the first apparatus determines that the signal modulation scheme of the to-be-sent data is a scheme 2, the first apparatus may process the original Golay complementary sequences based on an algorithm 2, where a first sequence (1) and a second sequence (2) that are obtained may also be used as the preamble sequence for channel estimation.

In a possible implementation, power of the preamble sequence is equal to signal power of the to-be-sent data.

It should be noted that signal power of the preamble sequence of the transmit end is usually equal to the signal power of the to-be-sent data. However, power of a digital signal is calculated based on an amplitude value of the digital signal. Specifically, for a digital signal, a digital sequence includes N elements in unit time for observation, and each element corresponds to one amplitude value. In this case, signal power of the digital signal is obtained by dividing a quadratic sum of amplitude values of the elements in the digital sequence by the quantity N of elements in the unit period of time.

For example, signal power of the foregoing sequence $a_{128}$ may be obtained based on the foregoing calculation, and average power E=1.

The amplitude values of the real parts and the imaginary parts of the elements in the first sequence and the second sequence are the same as the amplitude values of the real parts and/or the imaginary parts of some elements in the sequence corresponding to the to-be-sent data of the first apparatus. This is not specifically limited in this application. Several specific possible manners for generating the first sequence and the second sequence are described as examples below. Details are not described herein.

The sequence corresponding to the to-be-sent data is a data sequence included in valid data output by the first apparatus after the first apparatus outputs preamble data. The sequence may include values arranged in turn in a specific order and is used to indicate specific configuration information or service data requested by a user.

S502: The first apparatus outputs the preamble sequence, where the preamble sequence includes the first sequence and the second sequence.

The first apparatus outputs the preamble sequence, where the preamble sequence may be the first sequence and the second sequence that are arranged in turn. For example, the preamble sequence output by the first apparatus may be the first sequence, the second sequence, the first sequence, and the second sequence that are arranged in turn.

In the foregoing implementation provided in this application, the first apparatus configures, based on the signal modulation scheme of the to-be-sent data, the preamble sequence whose real parts and imaginary parts have amplitude values the same as those corresponding to the real parts and the imaginary parts of the to-be-sent data part. In this way, the receive end performs channel estimation based on the received preamble sequence. A communications channel has specific noise and interference, and it cannot be guaranteed that the amplitude values of the real parts and the imaginary parts of the preamble sequence received by the receive end are completely the same as the amplitude values corresponding to the real parts and the imaginary parts of the received data, but the amplitude values of the real parts and the imaginary parts of the preamble sequence received by the receive end are basically the same as the amplitude values corresponding to the real parts and the imaginary parts of the received data. Therefore, no relatively large quantization error is introduced when the low-precision ADC at the receive end adjusts AGC by using the preamble sequence, and converts an analog signal into a digital signal. Compared with that in a conventional technology, a channel estimation error is smaller, thereby effectively improving channel estimation precision and accuracy.

In a possible implementation, the signal modulation scheme of the to-be-sent data of the first apparatus may be 4QAM. For example, as shown in FIG. 2, coordinates of constellation points of four digital signals obtained after 4QAM modulation are respectively $(\frac{1}{\sqrt{2}}, \frac{1}{\sqrt{2}}), (\frac{1}{\sqrt{2}}, -\frac{1}{\sqrt{2}}), (-\frac{1}{\sqrt{2}}, \frac{1}{\sqrt{2}})$, and $(-\frac{1}{\sqrt{2}}, -\frac{1}{\sqrt{2}})$. Therefore, amplitude values of real parts and imaginary parts of the digital signals obtained after 4QAM modulation include $\frac{1}{\sqrt{2}}$ and $-\frac{1}{\sqrt{2}}$. In this case, the amplitude values of the real parts and the imaginary parts of the elements in the first sequence and the second sequence may include $\frac{1}{\sqrt{2}}$ and $-\frac{1}{\sqrt{2}}$.

Further, it can be learned, based on the foregoing signal power calculation method, that signal power is in direct proportion to the square of amplitude values of elements in a sequence. Therefore, in a possible implementation, when the signal modulation scheme of the to-be-sent data of the first apparatus is 4QAM, the amplitude values of the real parts and the imaginary parts of the elements in the first sequence and the second sequence may include $\sqrt{\frac{E}{2}}$ and

$-\sqrt{\frac{E}{2}}$, where E represents the signal power of the to-be-sent data.

In another possible implementation, for example, FIG. 6 is an illustration of constellation points, in a constellation diagram, of the sequence of the to-be-sent data obtained after 16QAM modulation. Coordinates of constellation points of 16 digital signals are respectively $(\frac{1}{\sqrt{10}}, \frac{1}{\sqrt{10}}), (\frac{3}{\sqrt{10}}, \frac{1}{\sqrt{10}}), (\frac{3}{\sqrt{10}}, \frac{3}{\sqrt{10}}), (\frac{1}{\sqrt{10}}, \frac{3}{\sqrt{10}})$,

$(-\frac{1}{\sqrt{10}}, \frac{1}{\sqrt{10}}), (-\frac{3}{\sqrt{10}}, \frac{1}{\sqrt{10}}), (-\frac{1}{\sqrt{10}}, \frac{3}{\sqrt{10}}), (-\frac{3}{\sqrt{10}}, \frac{3}{\sqrt{10}}), (\frac{1}{\sqrt{10}}, -\frac{1}{\sqrt{10}}), (\frac{1}{\sqrt{10}}, -\frac{3}{\sqrt{10}}), (\frac{3}{\sqrt{10}},$

$-\frac{1}{\sqrt{10}}), (\frac{3}{\sqrt{10}}, -\frac{3}{\sqrt{10}}), (-\frac{1}{\sqrt{10}}, -\frac{1}{\sqrt{10}}), (-\frac{1}{\sqrt{10}}, -\frac{3}{\sqrt{10}}), (-\frac{3}{\sqrt{10}}, -\frac{1}{\sqrt{10}})$, and

$(-\frac{3}{\sqrt{10}}, -\frac{3}{\sqrt{10}})$. Therefore, amplitude values of real parts and imaginary parts of the digital signals obtained after 16QAM modulation include $\frac{1}{\sqrt{10}}, -\frac{1}{\sqrt{10}}, \frac{3}{\sqrt{10}}$, and $-\frac{3}{\sqrt{10}}$. In this case, the amplitude values of the real parts and the imaginary parts of the elements in the first sequence and the second sequence may include $\frac{1}{\sqrt{10}}, -\frac{1}{\sqrt{10}}, \frac{3}{\sqrt{10}}$, and $-\frac{3}{\sqrt{10}}$.

Further, in an implementation, when the signal modulation scheme of the to-be-sent data of the first apparatus is 16QAM, the amplitude values of the real parts and the imaginary parts of the elements in the first sequence and the second sequence include: $\sqrt{\frac{E}{10}}, -\sqrt{\frac{E}{10}}, \frac{3\sqrt{E}}{\sqrt{10}}$, and $-\frac{3\sqrt{E}}{\sqrt{10}}$, where E represents the signal power of the to-be-sent data.

In a possible implementation, when the signal modulation scheme of the to-be-sent data output by the first apparatus is 4QAM, that the first apparatus may generate the first sequence and the second sequence through processing based on the preconfigured sequence and the signal modulation scheme of the to-be-sent data may specifically include:

the preconfigured sequence includes original Golay complementary sequences: a third sequence and a fourth sequence, and the third sequence and the fourth sequence may include elements 1 and -1 that are arranged in a preset order; and

the first apparatus may obtain the first sequence and the second sequence after performing $\dfrac{\pi}{2}$ binary phase shift keying (Binary Phase Shift Keying, BPSK) modulation and $\dfrac{k\pi}{4}$ phase shifting separately on the preconfigured third sequence and fourth sequence, where k is an odd number.

Specifically, the $n^{th}$ element in the first sequence meets the following formula:

$$A_n = a_n * \exp[\frac{j\pi(n-1)}{2} + \frac{jk\pi}{4}];$$

and

the $n^{th}$ element in the second sequence meets the following formula:

$$B_n = b_n * \exp[\frac{j\pi(n-1)}{2} + \frac{jk\pi}{4}],$$

where

$A_n$ represents the $n^{th}$ element in the first sequence, $B_n$ represents the $n^{th}$ element in the second sequence, $a_n$ represents the $n^{th}$ element in the third sequence, and $b_n$ represents the $n^{th}$ element in the fourth sequence.

For a preamble sequence generated and designed in the foregoing implementation of this application, a constellation diagram of the preamble sequence is consistent with a constellation diagram of signals obtained after 4QAM modulation. This can avoid the following problems: when the receive end uses a low-precision ADC to perform digital-to-analog conversion, amplitude values of the real parts/imaginary parts of the preamble sequence do not match amplitude values of the real parts/imaginary parts of the data part, and calculated phases of equivalent channels do not match, thereby improving channel estimation precision and improving system performance.

In another possible implementation, when the signal modulation scheme of the to-be-sent data is 4QAM, the first apparatus may alternatively obtain the first sequence and the second sequence after performing $\dfrac{k\pi}{4}$ phase shifting separately on a preconfigured third sequence and fourth sequence, where k is an odd number, and the third sequence and the fourth sequence are Golay complementary sequences.

Specifically, the $n^{th}$ element in the first sequence meets the following formula:

$$A_n = a_n * \exp\left(\frac{jk\pi}{4}\right);$$

and

the $n^{th}$ element in the second sequence meets the following formula:

$$B_n = b_n * \exp\left(\frac{jk\pi}{4}\right),$$

where

$A_n$ represents the n<sup>th</sup> element in the first sequence, $B_n$ represents the n<sup>th</sup> element in the second sequence, $a_n$ represents the n<sup>th</sup> element in the third sequence, and $b_n$ represents the n<sup>th</sup> element in the fourth sequence.

For example, a value of k may be 1. To be specific, the first apparatus may obtain the first sequence $A_n$ and the second sequence $B_n$ by performing $\dfrac{\pi}{4}$ phase shifting separately on the preconfigured third sequence $a_n$ and fourth sequence $b_n$, that is, $A_n = \dfrac{1}{\sqrt{2}}(a_n + ja_n)$, and $B_n = \dfrac{1}{\sqrt{2}}(b_n + jb_n)$. In terms of a constellation point, when coordinates of $a_n$ are (1, -1), it can be obtained that coordinates of $A_n$ are ( $\dfrac{1}{\sqrt{2}}$, $-\dfrac{1}{\sqrt{2}}$ ).

For example, a value of k may be -3. To be specific, the first apparatus may obtain the first sequence $A_n$ and the second sequence $B_n$ by performing $-\dfrac{3\pi}{4}$ phase shifting separately on the preconfigured third sequence $a_n$ and fourth sequence $b_n$, that is, $A_n = \dfrac{1}{\sqrt{2}}(-a_n - ja_n)$, and $B_n = \dfrac{1}{\sqrt{2}}(-b_n - jb_n)$. In terms of a constellation point, when coordinates of $a_n$ are (1, -1), it can be obtained that coordinates of $A_n$ are ( $-\dfrac{1}{\sqrt{2}}$, $\dfrac{1}{\sqrt{2}}$ ).

In addition, in the foregoing embodiment, the first apparatus obtains the first sequence and the second sequence through separate design based on the two preconfigured sequences. In another possible implementation, the first apparatus may alternatively obtain the first sequence and the second sequence through joint design based on two preconfigured original Golay complementary sequences. To be specific, when the signal modulation scheme of the to-be-sent data is 4QAM or 16QAM, that the first apparatus determines a first sequence and a second sequence based on a signal modulation scheme of to-be-sent data and a preconfigured sequence specifically includes: The first apparatus may obtain the first sequence by performing an operation based on a preconfigured third sequence and fourth sequence, and the first apparatus may obtain the second sequence by performing an operation based on the preconfigured third sequence and fourth sequence. The third sequence and the fourth sequence are preconfigured Golay complementary sequences.

Specifically, when the signal modulation scheme of the to-be-sent data is 4QAM, the n<sup>th</sup> element in the first sequence meets the following formula:

$$A_n = \dfrac{1}{\sqrt{2}}(a_n + jb_n);$$

and

the n<sup>th</sup> element in the second sequence meets the following formula:

$$B_n = \dfrac{1}{\sqrt{2}}(a_n - jb_n),$$

where

$A_n$ represents the n<sup>th</sup> element in the first sequence, $B_n$ represents the n<sup>th</sup> element in the second sequence, $a_n$ represents the n<sup>th</sup> element in the third sequence, and $b_n$ represents the n<sup>th</sup> element in the fourth sequence.

The sequence $A_n$ and the sequence $B_n$ designed based on the foregoing method still meet an autocorrelation property of Golay complementary sequences. Therefore, a method and an effect of channel estimation by the receive end are not affected. In addition, a constellation diagram of a designed preamble sequence is consistent with a constellation diagram of digital signals obtained after 4QAM modulation.

In addition, the first sequence and the second sequence may be obtained by additionally performing phase rotation by $\pm k\pi/2$ or $\pm k\pi$ on both of the foregoing designed sequence $A_n$ and sequence $B_n$, and used as the preamble sequence, where k is an integer.

Specifically, the $n^{th}$ element in the first sequence meets the following formula:

$$A_n = \frac{1}{\sqrt{2}}(a_n + jb_n) * \exp(\frac{jk\pi}{2});$$

and

the $n^{th}$ element in the second sequence meets the following formula:

$$B_n = \frac{1}{\sqrt{2}}(a_n - jb_n) * \exp(\frac{jk\pi}{2}),$$

where

$A_n$ represents the $n^{th}$ element in the first sequence, $B_n$ represents the $n^{th}$ element in the second sequence, $a_n$ represents the $n^{th}$ element in the third sequence, and $b_n$ represents the $n^{th}$ element in the fourth sequence.

In another possible implementation, when the signal modulation scheme of the to-be-sent data is 16QAM, the $n^{th}$ element in the first sequence may meet the following formula:

$$A_n = \frac{1}{\sqrt{10}}(2a_n + 2ja_n + b_n - jb_n);$$

and
the $n^{th}$ element in the second sequence meets the following formula:

$$B_n = \frac{1}{\sqrt{10}}(2b_n + 2jb_n + a_n - ja_n)$$

.

The sequence $A_n$ and the sequence $B_n$ designed based on the foregoing method still meet an autocorrelation property of Golay complementary sequences. Therefore, a method and an effect of channel estimation by the receive end are not affected. In addition, constellation points of a designed preamble sequence are partially consistent with constellation points of digital signals obtained after 16QAM modulation.

Similarly, the first sequence and the second sequence may be obtained by additionally performing phase rotation by $\pm k\pi/2$ or $\pm k\pi$ on both of the foregoing designed sequence $A_n$ and sequence $B_n$, and used as the preamble sequence, where k is an integer.

Specifically, the $n^{th}$ element in the first sequence meets the following formula:

$$A_n = \frac{1}{\sqrt{10}}(2a_n + 2ja_n + b_n - jb_n)\exp(\frac{jk\pi}{2});$$

and
the $n^{th}$ element in the second sequence meets the following formula:

$$B_{\mathrm{n}} = \frac{1}{\sqrt{10}} (2b_n + 2jb_n + a_{\mathrm{n}} - ja_n) \exp(\frac{jk\pi}{2}) \, .$$

Based on the foregoing several possible implementations provided in this application and based on the design methods for building a preamble sequence provided in this application, a person skilled in the art may select matched Golay complementary sequences as a preamble sequence based on a signal modulation scheme of to-be-sent data a transmit end; or may design online, based on locally preconfigured original Golay complementary sequences and the foregoing design algorithms provided in this application, Golay complementary sequences that match a signal modulation scheme of to-be-sent data, and use the Golay complementary sequences as a preamble sequence. In this way, amplitude values of real parts and imaginary parts of the preamble sequence sent by the transmit end are consistent with amplitude values of real parts and imaginary parts of a sequence corresponding to the to-be-sent data. A quantization error is relatively small when a low-precision ADC at a receive end quantizes an analog signal into a digital signal, thereby effectively improving channel estimation precision and accuracy and improving performance of a communications system.

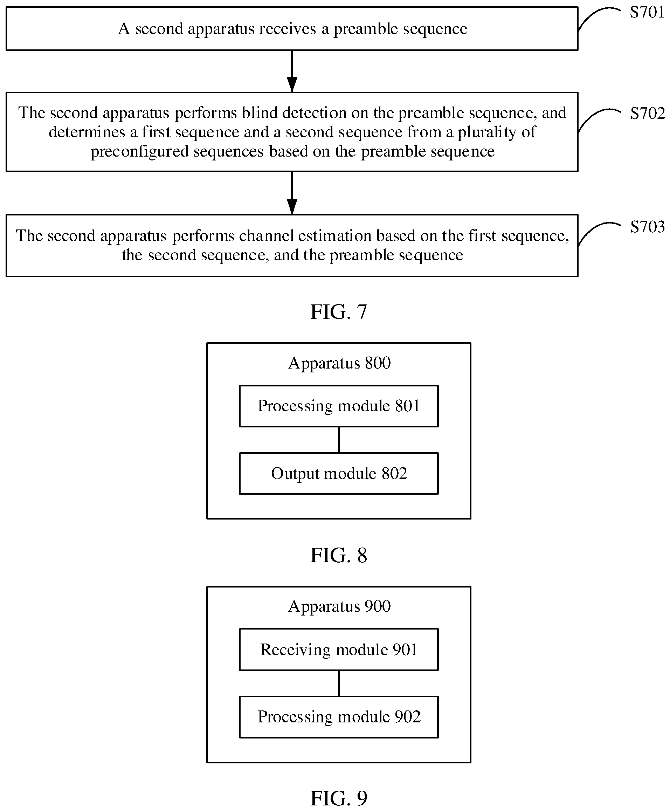

Next, the data transmission method provided in embodiments of this application is described from a perspective of a receive end. The method may be applied to a second apparatus. As shown in FIG. 7, the method may specifically include the following steps.

S701: The second apparatus receives a preamble sequence.

The second apparatus receives the preamble sequence sent by the first apparatus in the foregoing embodiment. The preamble sequence may be one of the several possible designs of a preamble sequence provided in the foregoing embodiment.

S702: The second apparatus performs blind detection on the preamble sequence, and determines a first sequence and a second sequence from a plurality of preconfigured sequences based on the preamble sequence.

A plurality of Golay complementary sequences are locally preconfigured in the second apparatus. The first sequence and the second sequence may be preconfigured Golay complementary sequences.

Specifically, that the second apparatus may perform blind detection on the received preamble sequence is to determine, from the plurality of preconfigured sequences based on the preamble sequence and a sequence correlation, specific configuration of the preamble sequence sent by the first apparatus. Specifically, the second apparatus may perform a cross-correlation operation between the received preamble sequence and each of the plurality of locally preconfigured sequences, and determine the first sequence and the second sequence based on a correlation.

It should be noted that because amplitude values of real parts/imaginary parts of a preamble sequence sent by a transmit end are the same as amplitude values of real parts/imaginary parts of a data part sent by the transmit end, and the preamble sequence sent by the transmit end and data sent by the transmit end encounter specific signal interference and noise during transmission through a channel, a preamble sequence and data received by a receive end are not always completely the same as, but are usually basically the same as, those original sent by the transmit end. Therefore, amplitude values of real parts/imaginary parts of the preamble sequence received by the receive end are basically the same as amplitude values of real parts/imaginary parts of the data part received by the receive end.

S703: The second apparatus performs channel estimation based on the first sequence, the second sequence, and the preamble sequence.

The second apparatus may perform channel estimation based on the first sequence, the second sequence, and the preamble sequence, to obtain a channel parameter sequence. Specifically, for a principle of channel estimation, refer to the foregoing formula (1), formula (2), and formula (3).

For example, the preamble sequence sent by the first apparatus includes a sequence $A_{\mathrm{n}}$ and a sequence $B_{\mathrm{n}}$, and the channel parameter sequence is represented as $H_{\mathrm{n}}$. After the preamble sequence including $A_{\mathrm{n}}$ and $B_{\mathrm{n}}$ is transmitted through a channel, a preamble sequence received by the second apparatus includes a sequence $A_{\mathrm{n}}'$ and a sequence $B_{\mathrm{n}}'$. In this case, the sequence $A_{\mathrm{n}}'$ and the sequence $B_{\mathrm{n}}'$ meet the following formulas: $A_{\mathrm{n}}' = A_{\mathrm{n}} \times H_n$, and $B_{\mathrm{n}}' = B_{\mathrm{n}} \times H_{\mathrm{n}}$, where $\times$ represents a convolution operation between sequences.

It can be learned, based on an autocorrelation property of the Golay complementary sequences, that a correlation sequence $R_{AB}$ meets the following formula:

$$R_{AB} = A_{\mathrm{n}}' \otimes A_n + B_{\mathrm{n}}' \otimes B_n = 2\mathrm{N}\, H_{\mathrm{n}} \, .$$

Therefore, channel estimation is $$H_{\mathrm{n}} = \frac{A_{\mathrm{n}}' \otimes A_n + B_{\mathrm{n}}' \otimes B_n}{2N}$$ , where $\otimes$ represents a cross-correlation operation between sequences.

Based on the foregoing implementation of this application, the receive end may determine, through blind detection, the preamble sequence used by the transmit end, thereby determining a modulation scheme of the data part based on the preamble sequence. For example, a preconfiguration between the first apparatus and the second apparatus is as follows: When to-be-sent data of the first apparatus uses 4QAM modulation, the first apparatus uses a sequence 1' and a sequence 2' as the preamble sequence; and when the to-be-sent data of the first apparatus uses 16QAM modulation, the first apparatus uses a sequence 3 and a sequence 4 as the preamble sequence. After the receive end receives the preamble sequence sent by the first apparatus, for example, when the received preamble sequence includes a sequence 1' and a sequence 2', the second apparatus may perform a cross-correlation operation, through blind detection, between each of the received sequence 1' and sequence 2' and each of the locally preconfigured sequence 1, sequence 2, sequence 3, and sequence 4; determine, based on obtained correlation functions, sequences with a best correlation, namely, the sequence 1 and the sequence 2; and determine the sequences as a preamble sequence format designed by the first apparatus.

Therefore, based on the foregoing implementation of this application, by using preamble sequences with different structures, the transmit end may implicitly indicate a modulation scheme of a data part by using the preamble sequence. In this way, the receive end may determine, through blind detection on a received preamble sequence, a type of a preamble sequence sent by the transmit end, thereby determining a modulation scheme of a data part sent by the transmit end and completing channel estimation based on the received preamble sequence.

In an implementation, the preamble sequence received by the second apparatus may include a third sequence and a fourth sequence. Then step S702 in which the second apparatus performs blind detection on the preamble sequence, and determines the first sequence and the second sequence from the preconfigured sequences based on the preamble sequence may specifically include the following steps.

Step 1: The second apparatus performs a cross-correlation operation between the third sequence and each of the plurality of preconfigured sequences, and/or the second apparatus performs a cross-correlation operation between the fourth sequence and each of the plurality of preconfigured sequences, to obtain a plurality of correlation sequences.

Golay complementary sequences may be a pair of two complementary sequences. Therefore, the second apparatus may perform a cross-correlation operation between one of Golay sequences included in the preamble sequence and the locally preconfigured sequences one by one, to obtain corresponding correlation sequences. For example, the second apparatus may perform a cross-correlation operation between the third sequence and each of the plurality of preconfigured sequences, the second apparatus may perform a cross-correlation operation between the fourth sequence and each of the plurality of preconfigured sequences, or the second apparatus may perform a cross-correlation operation between each of the third sequence and the fourth sequence and each of the plurality of preconfigured sequences.

Step 2: The second apparatus determines the first sequence and the second sequence based on the plurality of correlation sequences.

It can be learned, from the autocorrelation property of a Golay sequence described above, that a relatively high correlation value can be obtained based on the sum of correlation sequences obtained through autocorrelation performed on both sequences included in Golay complementary sequences. Therefore, the first sequence and the second sequence may be determined based on a degree of correlation between a plurality of correlation sequences obtained through cross-correlation.

For example, the sequences locally preconfigured in the second apparatus include a preconfigured sequence 1, a preconfigured sequence 2, a preconfigured sequence 3, and a preconfigured sequence 4. Then the second apparatus may perform a cross-correlation operation between each of the third sequence and the fourth sequence and each of the four preconfigured sequences, to obtain a plurality of correlation sequences. For example, $A'$ may be used to represent the third sequence, $B'$ may be used to represent the fourth sequence, $A_1$ may be used to represent the preconfigured sequence 1, $A_2$ may be used to represent the preconfigured sequence 2, $A_3$ may be used to represent the preconfigured sequence 3, and $A_4$ may be used to represent the preconfigured sequence 4.

Then, a plurality of correlation sequences obtained through blind detection may be separately as follows: $R_{A1} = A' \otimes A_1$, $R_{A2} = A' \otimes A_2$, $R_{A3} = A' \otimes A_3$, $R_{A4} = A' \otimes A_4$, $R_{B1} = B' \otimes B_1$, $R_{B2} = B' \otimes B_2$, $R_{B3} = B' \otimes B_3$, and $R_{B4} = B' \otimes B_4$. The first sequence and the second sequence are determined from the preconfigured sequence 1, the preconfigured sequence 2, the preconfigured sequence 3, and the preconfigured sequence 4 based on correlation values of the plurality of correlation sequences.

In an implementation, the second apparatus may alternatively calculate the sum of every two of the plurality of correlation sequences obtained by performing a cross-correlation operation between each of the third sequence and the fourth sequence and each of the four preconfigured sequences, and further determine the first sequence and the second sequence based on obtained correlation sequences. For example, the sum of every two of the sequences $R_{A1}$, $R_{A2}$, $R_{A3}$, $R_{A4}$, $R_{B1}$, $R_{B2}$, $R_{B3}$, and $R_{B4}$ obtained above is calculated. Specifically, the second apparatus may determine, as the first sequence and the second sequence, a group of sequences with a highest correlation value among the obtained correlation sequences, where the first sequence and the second sequence are an original preamble sequence pair sent by the transmit end.

For example, the preconfigured sequence 1 is one of the plurality of preconfigured sequences of the second apparatus, and the preconfigured sequence 2 is also one of the plurality of preconfigured sequences of the second apparatus. If a correlation sequence obtained by adding up a correlation sequence that is obtained by performing a cross-correlation operation between the third sequence and the preconfigured sequence 1 and a correlation sequence that is obtained by performing a cross-correlation operation between the fourth sequence and the preconfigured sequence 2 has a highest degree of correlation, the second apparatus determines that the preconfigured sequence 1 and the preconfigured sequence 2 are respectively the first sequence and the second sequence.

In an implementation, when the preamble sequence includes the third sequence and the fourth sequence, step S703 in which the second apparatus performs channel estimation based on the first sequence, the second sequence, and the preamble sequence may specifically include the following steps.

Step 1: The second apparatus performs a cross-correlation operation between the first sequence and the third sequence to obtain a fifth sequence, and the second apparatus performs a cross-correlation operation between the second sequence and the fourth sequence to obtain a sixth sequence.

For example, $A_n'$ represents the $n^{th}$ element in the third sequence, $C_n$ represents the $n^{th}$ element in the first sequence, $D_n$ represents the $n^{th}$ element in the second sequence, and $B_n'$ represents the $n^{th}$ element in the fourth sequence. Then, the $n^{th}$ element in the fifth sequence meets the following formula: $R_{5n} = A_n' \otimes C_n$, and the $n^{th}$ element in the sixth sequence meets the following formula: $R_{6n} = B_n' \otimes D_n$, where $\otimes$ represents the cross-correlation operation.

Step 2: The second apparatus obtains, based on the fifth sequence, the sixth sequence, and a quantity of elements in the third sequence, a channel parameter sequence for data transmission between the first apparatus and the second apparatus.

Specifically, it can be learned, based on the foregoing parameters, that the $n^{th}$ element $H_n$ included in the channel parameter sequence meets the following formula:

$$H_n = \frac{A_n' \otimes C_n + B_n' \otimes D_n}{2N}.$$

Based on the foregoing implementations provided in this application, the receive end may perform blind detection based on the received preamble sequence and the locally preconfigured sequences, and determine that a Golay sequence pair with a highest degree of correlation is a type of the preamble sequence sent by the transmit end. In this way, the receive end may perform an operation based on the determined Golay sequences and the received preamble sequence, to obtain a channel parameter for channel estimation. The amplitude values of the preamble sequence sent by the transmit end are the same as the amplitude values of the data part sent by the transmit end. Therefore, even if the preamble sequence and the data part are affected by specific interference or noise during transmission through a channel, the amplitude values of the preamble sequence received by the receive end are basically consistent, or at least partially consistent with, the amplitude values of the data part received by the receive end. Therefore, when an ADC at the receive end quantizes a digital signal, the quantization is relatively precise, without introducing a relatively large quantization error, thereby correspondingly improving channel estimation accuracy and improving performance of communications transmission.

An embodiment of this application further provides a data transmission apparatus. As shown in FIG. 8, the apparatus 800 may include a processing module 801 and an output module 802.

The processing module 801 may be configured to determine a first sequence and a second sequence based on a signal modulation scheme of to-be-sent data and a preconfigured sequence. The first sequence and the second sequence are Golay complementary sequences. Amplitude values of real parts and imaginary parts of elements in the first sequence and the second sequence are the same as amplitude values of real parts and/or imaginary parts of some elements in a sequence corresponding to the to-be-sent data.

The output module 802 may be configured to output a preamble sequence, where the preamble sequence includes the first sequence and the second sequence.

In a possible design, the signal modulation scheme of the to-be-sent data includes 4-quadrature amplitude modulation QAM or 16QAM.

In a possible design, when the signal modulation scheme of the to-be-sent data is 4QAM, the amplitude values of the real parts and the imaginary parts of the elements in the first sequence and the second sequence include $\sqrt{\dfrac{E}{2}}$

and $-\sqrt{\dfrac{E}{2}}$ , where E represents signal power of the to-be-sent data.

In a possible design, when the signal modulation scheme of the to-be-sent data is 16QAM, the amplitude values of the real parts and the imaginary parts of the elements in the first sequence and the second sequence include

$\sqrt{\dfrac{E}{10}}, -\sqrt{\dfrac{E}{10}}, \dfrac{3\sqrt{E}}{\sqrt{10}}$ , and $-\dfrac{3\sqrt{E}}{\sqrt{10}}$ , where E represents signal power of the to-be-sent data.

In a possible design, power of the preamble sequence is equal to the signal power of the to-be-sent data.

In a possible design, when the signal modulation scheme of the to-be-sent data output by the first apparatus is 4QAM, that the first apparatus determines a first sequence and a second sequence based on a signal modulation scheme of to-be-sent data and a preconfigured sequence specifically includes: The first apparatus obtains the first sequence and the second sequence after performing $\dfrac{\pi}{2}$ binary phase shift keying BPSK modulation and $\dfrac{k\pi}{4}$ phase shifting separately on a preconfigured third sequence and fourth sequence, where k is an odd number, and the third sequence and the fourth sequence are Golay complementary sequences.

In a possible design, when the signal modulation scheme of the to-be-sent data output by the first apparatus is 4QAM, that the first apparatus determines a first sequence and a second sequence based on a signal modulation scheme of to-be-sent data and a preconfigured sequence specifically includes: The first apparatus obtains the first sequence and the second sequence after performing $\dfrac{k\pi}{4}$ phase shifting separately on a preconfigured third sequence and fourth sequence, where k is an odd number, and the third sequence and the fourth sequence are Golay complementary sequences.

In a possible design, when the signal modulation scheme of the to-be-sent data is 4QAM or 16QAM, that the first apparatus determines a first sequence and a second sequence based on a signal modulation scheme of to-be-sent data and a preconfigured sequence specifically includes: The first apparatus obtains the first sequence by performing an operation based on a preconfigured third sequence and fourth sequence, and the first apparatus obtains the second sequence by performing an operation based on the preconfigured third sequence and fourth sequence, where the third sequence and the fourth sequence are Golay complementary sequences.

In a possible design, the third sequence and the fourth sequence include elements 1 and -1 that are arranged in a preset order.

In addition, an embodiment of this application further provides a data transmission apparatus. As shown in FIG. 9, the apparatus 900 includes a receiving module 901 and a processing module 902.

The receiving module 901 may be configured to receive a preamble sequence.

The processing module 902 may be configured to perform blind detection on the preamble sequence, and determine a first sequence and a second sequence from a plurality of preconfigured sequences based on the preamble sequence. The first sequence and the second sequence are preconfigured Golay complementary sequences.

The processing module 902 may be further configured to perform channel estimation based on the first sequence, the second sequence, and the preamble sequence.

In a possible design, that the second apparatus performs blind detection on the preamble sequence, and determines a first sequence and a second sequence from a plurality of preconfigured sequences based on the preamble sequence specifically includes: The preamble sequence includes a third sequence and a fourth sequence. The second apparatus performs a cross-correlation operation between the third sequence and each of the plurality of preconfigured sequences, and/or the second apparatus performs a cross-correlation operation between the fourth sequence and each of the plurality of preconfigured sequences, to obtain a plurality of correlation sequences. The second apparatus determines the first sequence and the second sequence based on the plurality of correlation sequences.

In a possible design, if a correlation sequence obtained by adding up a correlation sequence that is obtained by performing a cross-correlation operation between the third sequence and a preconfigured sequence 1 and a correlation sequence that is obtained by performing a cross-correlation operation between the fourth sequence and a preconfigured sequence 2 has a highest degree of correlation, the second apparatus determines that the preconfigured sequence 1 and the preconfigured sequence 2 are respectively the first sequence and the second sequence, where the preconfigured sequence 1 and the preconfigured sequence 2 are among the plurality of preconfigured sequences.

In a possible design, that the second apparatus performs channel estimation based on the first sequence, the second sequence, and the preamble sequence specifically includes: The preamble sequence includes the third sequence and the fourth sequence. The second apparatus performs a cross-correlation operation between the first sequence and the third sequence to obtain a fifth sequence, and the second apparatus performs a cross-correlation operation between the second sequence and the fourth sequence to obtain a sixth sequence. The second apparatus obtains, based on the fifth sequence, the sixth sequence, and a quantity of elements in the third sequence, a channel parameter sequence for data transmission between a first apparatus and the second apparatus.

In a possible design, the $n^{th}$ element $H_n$ in the channel parameter sequence meets the following formula:

$$H_n = \frac{A_n' \otimes C_n + B_n' \otimes D_n}{2N}$$

, where $A_n'$ represents the $n^{th}$ element in the third sequence, $C_n$ represents the $n^{th}$ element in the first sequence, $D_n$ represents the $n^{th}$ element in the second sequence, $B_n'$ represents the $n^{th}$ element in the fourth sequence, N represents the quantity of elements in the third sequence, and $\otimes$ represents the cross-correlation operation.

It can be understood that when the apparatus is an electronic device, the output module may be a transmitter and may include an antenna, a radio frequency circuit, and the like. The processing module may be a processor, for example, a baseband chip. When the apparatus is a component that has a function of the first apparatus or the second apparatus, a sending module may be a radio frequency unit, and the processing module may be a processor. When the apparatus is a chip system, the sending module may be an output interface of the chip system, and the processing module may be a processor of the chip system, for example, a central processing unit (central processing unit, CPU).

It should be noted that, for a specific execution process and embodiment of the apparatus 800, reference may be made to steps performed by the first apparatus and related descriptions in the foregoing method embodiments. For a specific execution process and embodiment of the apparatus 900, reference may be made to steps performed by the second apparatus and related descriptions in the foregoing method embodiments. For the technical problems resolved and technical effects achieved, reference may also be made to content described in the foregoing embodiments. Details are not described herein again.

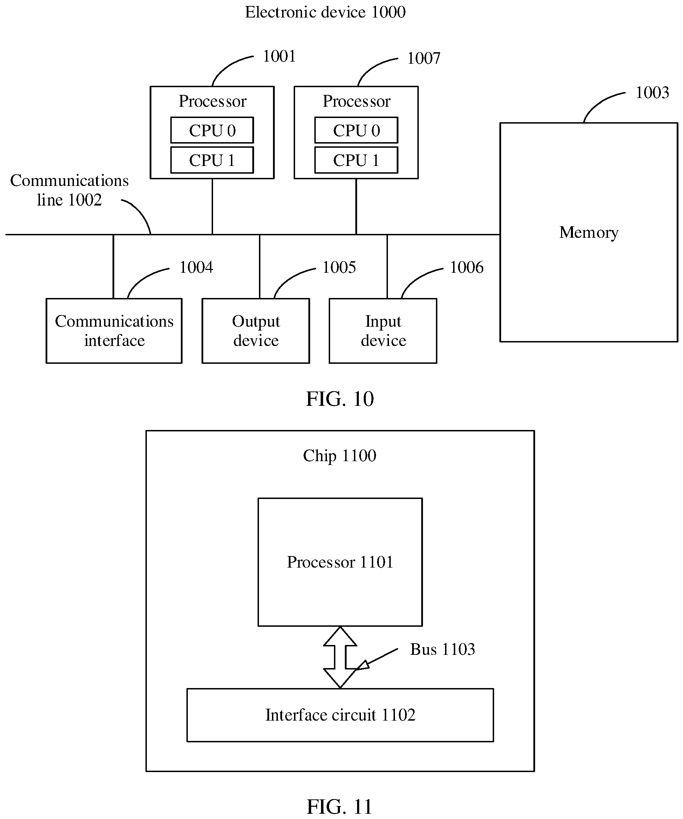

In the embodiments, the apparatus may be presented in a form in which function modules are obtained through division in an integrated manner. The "module" herein may be a specific circuit, a processor and a memory that execute one or more software or firmware programs, an integrated logic circuit, and/or another component that can provide the foregoing functions. In a simple embodiment, a person skilled in the art may figure out that the data transmission apparatus may use a form shown in the following FIG. 10.

FIG. 10 is a schematic diagram of a structure of an example electronic device 1000 according to an embodiment of this application. The electronic device 1000 may be the first apparatus or the second apparatus in the foregoing implementations, and is configured to perform the data transmission method in the foregoing implementations. As shown in FIG. 10, the electronic device 1000 may include at least one processor 1001, a communications line 1002, and a memory 1003.

The processor 1001 may be a general-purpose central processing unit (central processing unit, CPU), a microprocessor, an application-specific integrated circuit (application-specific integrated circuit, ASIC), or one or more integrated circuits configured to control program execution of the solutions in this application.

The communications line 1002 may include a path for transferring information between the foregoing components. For example, the communications line may be a bus.

For example, the memory 1003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Bluray disc, or the like), a disk storage medium or another magnetic storage device, or any other medium that can be used to carry or store expected program code in a form of instructions or a data structure and that can be accessed by a computer. However, the memory 1003 is not limited thereto. The memory may exist independently, and is connected to the processor through the communications line 1002. Alternatively, the memory may be integrated with the processor. The memory provided in embodiments of this application is usually a nonvolatile memory. The memory 1003 is configured to store computer program instructions related to execution of the solutions of embodiments of this application, and is controlled by the processor 1001 during running. The processor 1001 is configured to execute the computer program instructions stored in the memory 1003, to implement the method provided in embodiments of this application.

Optionally, computer-executable instructions in this embodiment of this application may also be referred to as application program code. This is not specifically limited in this embodiment of this application.

During specific implementation, in an embodiment, the processor 1001 may include one or more CPUs such as a CPU 0 and a CPU 1 in FIG. 10.

During specific implementation, in an embodiment, the electronic device 1000 may include a plurality of processors, for example, the processor 1001 and a processor 1007 in FIG. 10. These processors may be single-core processors (single-CPU) or may be multi-core processors (multi-CPU). Herein, the processor may be one or more devices, circuits, and/or processing cores configured to process data (for example, computer program instructions).

During specific implementation, in an embodiment, the electronic device 1000 may further include a communications interface 1004. The electronic device may receive and send data or communicate with another device or communications network by using the communications interface 1004. The communications interface 1004 may be, for example, an Ethernet interface, a radio access network (radio access network, RAN) interface, a wireless local area network (wireless local area network, WLAN) interface, or a USB interface.

During specific implementation, in an embodiment, the electronic device 1000 may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display device, a cathode ray tube (cathode ray tube, CRT) display device, or a projector (projector). The input device 1006 communicates with the processor 1001, and may receive a user input in a plurality of manners. For example, the input device 1006 may be a mouse, a keyboard, a touchscreen device, or a sensor device.

During specific implementation, the electronic device 1000 may be a desktop computer, a portable computer, a network server, a palmtop computer (personal digital assistant, PDA), a mobile phone, a tablet computer, a wireless terminal device, an embedded device, a smart camera, or a device with a structure similar to that in FIG. 10. A type of the electronic device 1000 is not limited in embodiments of this application.

In some embodiments, the processor 1001 in FIG. 10 may invoke the computer program instructions stored in the memory 1003, so that the electronic device 1000 performs the method in the foregoing method embodiments.

For example, a function/an implementation process of each processing module in FIG. 8 or FIG. 9 may be implemented by the processor 1001 in FIG. 10 by invoking the computer program instructions stored in the memory 1003. For example, a function/an implementation process of the processing module 801 in FIG. 8 may be implemented by the processor 1001 in FIG. 10 by invoking the computer execution instructions stored in the memory 1003. A function/an implementation process of the processing module 902 in FIG. 9 may be implemented by the processor 1001 in FIG. 10 by invoking the computer execution instructions stored in the memory 1003.

In an example embodiment, a computer-readable storage medium including instructions is further provided. The instructions may be executed by the processor 1001 of the electronic device 1000, to complete the data transmission method in the foregoing embodiments. Therefore, for technical effects that can be achieved by the computer-readable storage medium, refer to the foregoing method embodiments. Details are not described herein again.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus.

FIG. 11 is a schematic diagram of a structure of a chip according to an embodiment of this application. The chip 1100 includes one or more processors 1101 and an interface circuit 1102. Optionally, the chip 1100 may further include a bus 1103.

The processor 1101 may be an integrated circuit chip and has a signal processing capability. In an implementation process, the steps in the foregoing method may be implemented by using a hardware integrated logical circuit in the processor 1101, or by using instructions in a form of software. The processor 1101 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor 1101 may implement or perform the methods and steps disclosed in embodiments of this application. The general-purpose processor may be a microprocessor, or the processor may be any conventional processor or the like.

The interface circuit 1102 is configured to send or receive data, an instruction, or information. The processor 1101 may perform processing by using the data, instruction, or information received by the interface circuit 1102, and may send processed information by using the interface circuit 1102.

Optionally, the chip 1100 further includes a memory. The memory may include a read-only memory and a random access memory, and provide operation instructions and data for the processor. A part of the memory may further include a nonvolatile random access memory (Nonvolatile Random Access Memory, NVRAM).

Optionally, the memory stores an executable software module or a data structure. The processor may perform a corresponding operation by invoking the operation instructions stored in the memory (the operation instructions may be stored in an operating system).

Optionally, the chip 1100 may use the data transmission apparatus (including the first apparatus and the second apparatus) in embodiments of this application. Optionally, the interface circuit 1102 may be configured to output an execution result of the processor 1101. For a communications method provided in one or more embodiments of this application, refer to the foregoing embodiments. Details are not described herein again.

It should be noted that functions respectively corresponding to the processor 1101 and the interface circuit 1102 may be implemented through hardware design, may be implemented through software design, or may be implemented through a combination of software and hardware, which is not limited herein.

A person skilled in the art can easily figure out another implementation solution of the present invention after considering the specification and practicing the present invention that is disclosed herein. This application is intended to cover any variations, functions, or adaptive changes of the disclosure. These variations, functions, or adaptive changes comply with general principles of the disclosure, and include common knowledge or a commonly used technical means in the technical field that is not disclosed in the disclosure.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A data transmission method, wherein the method comprises:

   determining, by a first apparatus, a first sequence and a second sequence based on a signal modulation scheme of to-be-sent data and a preconfigured sequence, wherein the first sequence and the second sequence are Golay complementary sequences, and amplitude values of real parts and imaginary parts of elements in the first sequence and the second sequence are the same as amplitude values of real parts and/or imaginary parts of some elements in a sequence corresponding to the to-be-sent data; and
   outputting, by the first apparatus, a preamble sequence, wherein the preamble sequence comprises the first sequence and the second sequence.

2. The method according to claim 1, wherein the signal modulation scheme of the to-be-sent data comprises 4-quadrature amplitude modulation QAM or 16QAM.

3. The method according to claim 2, wherein when the signal modulation scheme of the to-be-sent data is 4QAM, the amplitude values of the real parts and the imaginary parts of the elements in the first sequence and the second sequence comprise: $\sqrt{\dfrac{E}{2}}$ and $-\sqrt{\dfrac{E}{2}}$, wherein E represents signal power of the to-be-sent data.

4. The method according to claim 2, wherein when the signal modulation scheme of the to-be-sent data is 16QAM, the amplitude values of the real parts and the imaginary parts of the elements in the first sequence and the second sequence comprise: $\sqrt{\dfrac{E}{10}}, -\sqrt{\dfrac{E}{10}}, \dfrac{3\sqrt{E}}{\sqrt{10}}$, and $-\dfrac{3\sqrt{E}}{\sqrt{10}}$, wherein E represents signal power of the to-be-sent data.

5. The method according to any one of claims 1 to 4, wherein power of the preamble sequence is equal to the signal power of the to-be-sent data.

6. The method according to claim 2, wherein when the signal modulation scheme of the to-be-sent data output by the first apparatus is 4QAM, the determining, by a first apparatus, a first sequence and a second sequence based on a signal modulation scheme of to-be-sent data and a preconfigured sequence specifically comprises: obtaining, by the first apparatus, the first sequence and the second sequence after performing $\dfrac{\pi}{2}$ binary phase shift keying BPSK modulation and $\dfrac{k\pi}{4}$ phase shifting separately on a preconfigured third sequence and fourth sequence, wherein k is an odd number, and the third sequence and the fourth sequence are Golay complementary sequences.

7. The method according to claim 2, wherein when the signal modulation scheme of the to-be-sent data output by the first apparatus is 4QAM, the determining, by a first apparatus, a first sequence and a second sequence based on a signal modulation scheme of to-be-sent data and a preconfigured sequence specifically comprises:

obtaining, by the first apparatus, the first sequence and the second sequence after performing $\dfrac{k\pi}{4}$ phase shifting separately on a preconfigured third sequence and fourth sequence, wherein k is an odd number, and the third sequence and the fourth sequence are Golay complementary sequences.

8. The method according to claim 2, wherein when the signal modulation scheme of the to-be-sent data is 4QAM or 16QAM, the determining, by a first apparatus, a first sequence and a second sequence based on a signal modulation scheme of to-be-sent data and a preconfigured sequence specifically comprises:

obtaining, by the first apparatus, the first sequence by performing an operation based on a preconfigured third sequence and fourth sequence, and
obtaining, by the first apparatus, the second sequence by performing an operation based on the preconfigured third sequence and fourth sequence, wherein the third sequence and the fourth sequence are Golay complementary sequences.

9. The method according to any one of claims 6 to 8, wherein the third sequence and the fourth sequence comprise elements 1 and -1 that are arranged in a preset order.

10. The method according to claim 6, wherein an $n^{th}$ element in the first sequence meets the following formula:

$$A_n \;=\; a_n * \exp[\frac{j\pi\,(n-1)}{2} + \frac{jk\pi}{4}];$$

and

$$B_n \;=\; b_n * \exp[\frac{j\pi\,(n-1)}{2} + \frac{jk\pi}{4}],$$

an $n^{th}$ element in the second sequence meets the following formula:
wherein $A_n$ represents the $n^{th}$ element in the first sequence, $B_n$ represents the $n^{th}$ element in the second sequence, $a_n$ represents an $n^{th}$ element in the third sequence, and $b_n$ represents an $n^{th}$ element in the fourth sequence.

11. The method according to claim 7, wherein an $n^{th}$ element in the first sequence meets the following formula:

$$A_n \;=\; a_n * \exp\left(\frac{jk\pi}{4}\right);$$

and

$$B_n \;=\; b_n * \exp\left(\frac{jk\pi}{4}\right)$$

an $n^{th}$ element in the second sequence meets the following formula: , wherein $A_n$ represents the $n^{th}$ element in the first sequence, $B_n$ represents the $n^{th}$ element in the second sequence, $a_n$ represents an $n^{th}$ element in the third sequence, and $b_n$ represents an $n^{th}$ element in the fourth sequence.

12. The method according to claim 8, wherein when the signal modulation scheme of the to-be-sent data is 4QAM, an $n^{th}$ element in the first sequence meets the following formula:

$$A_n = \frac{1}{\sqrt{2}}(a_n + jb_n) * \exp(\frac{jk\pi}{2})$$ ; and

an $n^{th}$ element in the second sequence meets the following formula:

$$B_n = \frac{1}{\sqrt{2}}(a_n - jb_n) * \exp(\frac{jk\pi}{2})$$ , wherein

$A_n$ represents the $n^{th}$ element in the first sequence, $B_n$ represents the $n^{th}$ element in the second sequence, $a_n$ represents an $n^{th}$ element in the third sequence, $b_n$ represents an $n^{th}$ element in the fourth sequence, and k is an integer.

13. The method according to claim 8, wherein when the signal modulation scheme of the to-be-sent data is 16QAM, an $n^{th}$ element in the first sequence meets the following formula:

$$A_n = \frac{1}{\sqrt{10}}(2a_n + 2ja_n + b_n - jb_n)\exp(\frac{jk\pi}{2}) ;$$

and
an $n^{th}$ element in the second sequence meets the following formula: $B_n =$

$$\frac{1}{\sqrt{10}}(2b_n + 2jb_n + a_n - ja_n)\exp(\frac{jk\pi}{2})$$
, wherein $A_n$ represents the $n^{th}$ element in the first sequence, $B_n$ represents the $n^{th}$ element in the second sequence, $a_n$ represents an $n^{th}$ element in the third sequence, $b_n$ represents an $n^{th}$ element in the fourth sequence, and k is an integer.

14. A data transmission method, wherein the method comprises:

receiving, by a second apparatus, a preamble sequence;
performing, by the second apparatus, blind detection on the preamble sequence, and determining a first sequence and a second sequence from a plurality of preconfigured sequences based on the preamble sequence, wherein the first sequence and the second sequence are preconfigured Golay complementary sequences; and
performing, by the second apparatus, channel estimation based on the first sequence, the second sequence, and the preamble sequence.

15. The method according to claim 14, wherein the performing, by the second apparatus, blind detection on the preamble sequence, and determining a first sequence and a second sequence from preconfigured sequences based on the preamble sequence specifically comprises:

the preamble sequence comprises a third sequence and a fourth sequence, and the second apparatus performs a cross-correlation operation between the third sequence and each of the plurality of preconfigured sequences, and/or the second apparatus performs a cross-correlation operation between the fourth sequence and each of the plurality of preconfigured sequences, to obtain a plurality of correlation sequences; and
the second apparatus determines the first sequence and the second sequence based on the plurality of correlation sequences.

16. The method according to claim 15, wherein if a correlation sequence obtained by adding up a correlation sequence that is obtained by performing a cross-correlation operation between the third sequence and a preconfigured sequence 1 and a correlation sequence that is obtained by performing a cross-correlation operation between the fourth sequence and a preconfigured sequence 2 has a highest degree of correlation, the second apparatus determines that the preconfigured sequence 1 and the preconfigured sequence 2 are respectively the first sequence and the second sequence, wherein the preconfigured sequence 1 and the preconfigured sequence 2 are among the plurality of preconfigured sequences.

17. The method according to any one of claims 14 to 16, wherein the performing, by the second apparatus, channel estimation based on the first sequence, the second sequence, and the preamble sequence specifically comprises:

the preamble sequence comprises the third sequence and the fourth sequence, the second apparatus performs a cross-correlation operation between the first sequence and the third sequence to obtain a fifth sequence, and the second apparatus performs a cross-correlation operation between the second sequence and the fourth sequence to obtain a sixth sequence; and

the second apparatus obtains, based on the fifth sequence, the sixth sequence, and a quantity of elements in the third sequence, a channel parameter sequence for data transmission between the first apparatus and the second apparatus.

18. The method according to claim 17, wherein an $n^{th}$ element $H_n$ in the channel parameter sequence meets the following formula:

$$H_n \;=\; \frac{A_n' \otimes C_n + B_n' \otimes D_n}{2N},$$

wherein $A_n'$ represents an $n^{th}$ element in the third sequence, $C_n$ represents an $n^{th}$ element in the first sequence, $D_n$ represents an $n^{th}$ element in the second sequence, $B_n'$ represents an $n^{th}$ element in the fourth sequence, N represents the quantity of elements in the third sequence, and $\otimes$ represents the cross-correlation operation.

19. A data transmission apparatus, wherein the apparatus comprises:

a processing module, configured to determine a first sequence and a second sequence based on a signal modulation scheme of to-be-sent data and a preconfigured sequence, wherein the first sequence and the second sequence are Golay complementary sequences, and amplitude values of real parts and imaginary parts of elements in the first sequence and the second sequence are the same as amplitude values of real parts and/or imaginary parts of some elements in a sequence corresponding to the to-be-sent data; and

an output module, configured to output a preamble sequence, wherein the preamble sequence comprises the first sequence and the second sequence.

20. The apparatus according to claim 19, wherein the signal modulation scheme of the to-be-sent data comprises 4-quadrature amplitude modulation QAM or 16QAM.

21. The apparatus according to claim 20, wherein when the signal modulation scheme of the to-be-sent data is 4QAM, the amplitude values of the real parts and the imaginary parts of the elements in the first sequence and the second

sequence comprise: $\sqrt{\dfrac{E}{2}}$ and $-\sqrt{\dfrac{E}{2}}$ , wherein E represents signal power of the to-be-sent data.

22. The apparatus according to claim 20, wherein when the signal modulation scheme of the to-be-sent data is 16QAM, the amplitude values of the real parts and the imaginary parts of the elements in the first sequence and the second

sequence comprise: $\sqrt{\dfrac{E}{10}}, -\sqrt{\dfrac{E}{10}}, \dfrac{3\sqrt{E}}{\sqrt{10}}$ , and $-\dfrac{3\sqrt{E}}{\sqrt{10}}$ , wherein E represents signal power of the to-be-sent data.

23. The apparatus according to any one of claims 19 to 22, wherein power of the preamble sequence is equal to the signal power of the to-be-sent data.

24. The apparatus according to claim 20, wherein when the signal modulation scheme of the to-be-sent data is 4QAM, the processing module is specifically configured to: obtain the first sequence and the second sequence after per-

forming $\dfrac{\pi}{2}$ binary phase shift keying BPSK modulation and $\dfrac{k\pi}{4}$ phase shifting separately on a preconfigured third sequence and fourth sequence, wherein k is an odd number, and the third sequence and the fourth sequence are Golay complementary sequences.

**25.** The apparatus according to claim 20, wherein when the signal modulation scheme of the to-be-sent data is 4QAM, the processing module is specifically configured to: obtain the first sequence and the second sequence after performing $\dfrac{k\pi}{4}$ phase shifting separately on a preconfigured third sequence and fourth sequence, wherein k is an odd number, and the third sequence and the fourth sequence are Golay complementary sequences.

**26.** The apparatus according to claim 20, wherein when the signal modulation scheme of the to-be-sent data is 4QAM or 16QAM, the processing module is specifically configured to:

> obtain the first sequence by performing an operation based on a preconfigured third sequence and fourth sequence, and
> obtain the second sequence by performing an operation based on the preconfigured third sequence and fourth sequence, wherein the third sequence and the fourth sequence are Golay complementary sequences.

**27.** The apparatus according to any one of claims 24 to 26, wherein the third sequence and the fourth sequence comprise elements 1 and -1 that are arranged in a preset order.

**28.** The apparatus according to claim 24, wherein an $n^{th}$ element in the first sequence meets the following formula:

$$A_n \;=\; a_n * \exp[\frac{j\pi\,(n-1)}{2} + \frac{jk\pi}{4}];$$

and

an $n^{th}$ element in the second sequence meets the following formula: $B_n \;=\; b_n * \exp[\frac{j\pi\,(n-1)}{2} + \frac{jk\pi}{4}]$ , wherein $A_n$ represents the $n^{th}$ element in the first sequence, $B_n$ represents the $n^{th}$ element in the second sequence, $a_n$ represents an $n^{th}$ element in the third sequence, and $b_n$ represents an $n^{th}$ element in the fourth sequence.

**29.** The apparatus according to claim 25, wherein an $n^{th}$ element in the first sequence meets the following formula:

$$A_n \;=\; a_n * \exp\;(\frac{jk\pi}{4});$$

and

an $n^{th}$ element in the second sequence meets the following formula: $B_n \;=\; b_n * \exp\;(\frac{jk\pi}{4})$ , wherein $A_n$ represents the $n^{th}$ element in the first sequence, $B_n$ represents the $n^{th}$ element in the second sequence, $a_n$ represents an $n^{th}$ element in the third sequence, and $b_n$ represents an $n^{th}$ element in the fourth sequence.

**30.** The apparatus according to claim 26, wherein when the signal modulation scheme of the to-be-sent data is 4QAM, an $n^{th}$ element in the first sequence meets the following formula: $A_n \;=\; \frac{1}{\sqrt{2}}(a_n + jb_n) * \exp(\frac{jk\pi}{2})$ ; and

an $n^{th}$ element in the second sequence meets the following formula: $B_n \;=\; \frac{1}{\sqrt{2}}(a_n - jb_n) * \exp(\frac{jk\pi}{2})$ , wherein $A_n$ represents the $n^{th}$ element in the first sequence, $B_n$ represents the $n^{th}$ element in the second sequence, $a_n$ represents an $n^{th}$ element in the third sequence, $b_n$ represents an $n^{th}$ element in the fourth sequence, and k is an integer.

31. The apparatus according to claim 26, wherein when the signal modulation scheme of the to-be-sent data is 16QAM, an $n^{th}$ element in the first sequence meets the following formula:

$$A_n = \frac{1}{\sqrt{10}}(2a_n + 2ja_n + b_n - jb_n)\exp(\frac{jk\pi}{2});$$

and

an $n^{th}$ element in the second sequence meets the following formula: $B_n = \frac{1}{\sqrt{10}}(2b_n + 2jb_n + a_n - ja_n)\exp(\frac{jk\pi}{2})$, wherein $A_n$ represents the $n^{th}$ element in the first sequence, $B_n$ represents the $n^{th}$ element in the second sequence, $a_n$ represents an $n^{th}$ element in the third sequence, $b_n$ represents an $n^{th}$ element in the fourth sequence, and k is an integer.

32. A data transmission apparatus, wherein the apparatus comprises:

    a receiving module, configured to receive a preamble sequence; and
    a processing module, configured to perform blind detection on the preamble sequence, and determine a first sequence and a second sequence from a plurality of preconfigured sequences based on the preamble sequence, wherein the first sequence and the second sequence are preconfigured Golay complementary sequences, wherein
    the processing module is further configured to perform channel estimation based on the first sequence, the second sequence, and the preamble sequence.

33. The apparatus according to claim 32, wherein the preamble sequence comprises a third sequence and a fourth sequence, and the processing module is specifically configured to: perform a cross-correlation operation between the third sequence and each of the plurality of preconfigured sequences, and/or the second apparatus performs a cross-correlation operation between the fourth sequence and each of the plurality of preconfigured sequences, to obtain a plurality of correlation sequences; and
    determine the first sequence and the second sequence based on the plurality of correlation sequences.

34. The apparatus according to claim 32, wherein if a correlation sequence obtained by adding up a correlation sequence that is obtained by performing a cross-correlation operation between the third sequence and a preconfigured sequence 1 and a correlation sequence that is obtained by performing a cross-correlation operation between the fourth sequence and a preconfigured sequence 2 has a highest degree of correlation, the processing module determines that the preconfigured sequence 1 and the preconfigured sequence 2 are respectively the first sequence and the second sequence, wherein the preconfigured sequence 1 and the preconfigured sequence 2 are among the plurality of preconfigured sequences.

35. The apparatus according to any one of claims 32 to 34, wherein the preamble sequence comprises a third sequence and a fourth sequence, and the processing module is specifically configured to:

    performs a cross-correlation operation between the first sequence and the third sequence to obtain a fifth sequence, and the second apparatus performs a cross-correlation operation between the second sequence and the fourth sequence to obtain a sixth sequence; and
    obtain, based on the fifth sequence, the sixth sequence, and a quantity of elements in the third sequence, a channel parameter sequence for data transmission between the first apparatus and the second apparatus.

36. The apparatus according to claim 35, wherein an $n^{th}$ element $H_n$ in the channel parameter sequence meets the following formula:

$$H_n = \frac{A'_n \otimes C_n + B'_n \otimes D_n}{2N},$$

wherein $A_n'$ represents an $n^{th}$ element in the third sequence, $C_n$ represents an $n^{th}$ element in the first sequence, $D_n$ represents an $n^{th}$ element in the second sequence, $B_n'$ represents an $n^{th}$ element in the fourth sequence, N represents the quantity of elements in the third sequence, and $\otimes$ represents the cross-correlation operation.

37. An electronic device, wherein the electronic device comprises:

   a processor and a transmission interface, wherein
   the processor is configured to execute instructions stored in a memory, to implement the method according to any one of claims 1 to 13 or 14 to 18.

38. A computer-readable storage medium, wherein the computer-readable storage medium stores instructions, and when the instructions are executed by a computer or a processor, the computer or the processor is enabled to perform the method according to any one of claims 1 to 13 or claims 14 to 18.

39. A computer program product, comprising computer program code, wherein when the computer program product is run on a computer, the computer is enabled to perform the method according to any one of claims 1 to 13 or claims 14 to 18.

40. A communications system, wherein the communications system comprises the apparatus according to any one of claims 19 to 31 and the apparatus according to any one of claims 32 to 36.

Imaginary part

● (0, 1)

● (−1, 0)

● (1, 0)  Real part

● (0, −1)

FIG. 1

Imaginary part

● $(\dfrac{1}{\sqrt{2}}, \dfrac{1}{\sqrt{2}})$

$(-\dfrac{1}{\sqrt{2}}, \dfrac{1}{\sqrt{2}})$ ●

Real part

$(-\dfrac{1}{\sqrt{2}}, -\dfrac{1}{\sqrt{2}})$ ●

● $(\dfrac{1}{\sqrt{2}}, -\dfrac{1}{\sqrt{2}})$

FIG. 2

Base station

Terminal

Terminal

FIG. 3

FIG. 4

A first apparatus determines a first sequence and a second sequence based on a signal modulation scheme of to-be-sent data and a preconfigured sequence, where amplitude values of real parts and imaginary parts of elements in the first sequence and the second sequence are the same as amplitude values of real parts and/or imaginary parts of some elements in a sequence corresponding to the to-be-sent data of the first apparatus

S501

The first apparatus outputs a preamble sequence, where the preamble sequence includes the first sequence and the second sequence

S502

FIG. 5

FIG. 6

| A second apparatus receives a preamble sequence | S701 |

↓

| The second apparatus performs blind detection on the preamble sequence, and determines a first sequence and a second sequence from a plurality of preconfigured sequences based on the preamble sequence | S702 |

↓

| The second apparatus performs channel estimation based on the first sequence, the second sequence, and the preamble sequence | S703 |

FIG. 7

Apparatus 800

Processing module 801

Output module 802

FIG. 8

Apparatus 900

Receiving module 901

Processing module 902

FIG. 9

Electronic device 1000

FIG. 10

FIG. 11

## INTERNATIONAL SEARCH REPORT

| | International application No. |
|---|---|
| | **PCT/CN2021/104772** |

**A.    CLASSIFICATION OF SUBJECT MATTER**

H04W 24/02(2009.01)i;  H04L 25/02(2006.01)i;  H04L 27/34(2006.01)i

According to International Patent Classification (IPC) or to both national classification and IPC

**B.    FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; CNABS; CNKI; VEN; USTXT; EPTXT; WOTXT; 3GPP; IEEE: 华为, 前导码, 格雷, 互补, 序列, 幅值, 幅度, 功率, 恒定, 相等, 一致, 调制, preamble, golay, complementary, sequence, amplitude, power, QAM, BPSK

**C.    DOCUMENTS CONSIDERED TO BE RELEVANT**

| Category* | Citation of document, with indication, where appropriate, of the relevant passages | Relevant to claim No. |
|---|---|---|
| X | MIKE WOLF et al. "Synchronization and Channel Estimation for Optical Block-transmission Systems with IM/DD" *2016 18th International Conference on Transparent Optical Networks (ICTON),* 25 August 2016 (2016-08-25), ISSN: 2161-2064, pp. 1-5 | 14-17, 32-35, 37-39 |
| Y | MIKE WOLF et al. "Synchronization and Channel Estimation for Optical Block-transmission Systems with IM/DD" *2016 18th International Conference on Transparent Optical Networks (ICTON),* 25 August 2016 (2016-08-25), ISSN: 2161-2064, pp. 1-5 | 1-9, 19-27, 37-40 |
| Y | CN 101048961 A (SAMSUNG ELECTRONICS CO., LTD.) 03 October 2007 (2007-10-03) description, pages 5-15 | 1-9, 19-27, 37-40 |
| A | CN 107182118 A (SHENZHEN HHN ENERGY SAVING TECHNOLOGY CO., LTD.) 19 September 2017 (2017-09-19) entire document | 1-40 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 September 2021** | **26 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2021/104772** |

**C.  DOCUMENTS CONSIDERED TO BE RELEVANT**

| Category* | Citation of document, with indication, where appropriate, of the relevant passages | Relevant to claim No. |
|---|---|---|
| A | US 2005036481 A1 (CHAYAT NAFTALI et al.) 17 February 2005 (2005-02-17) <br> entire document | 1-40 |
| A | CHANGHO SUH et al. "Preamble Design for Channel Estimation in MIMO-OFDM Systems" *GLOBECOM '03. IEEE Global Telecommunications Conference (IEEE Cat. No.03CH37489)*, 14 January 2004 (2004-01-14), <br> entire document | 1-40 |

Form PCT/ISA/210 (second sheet) (January 2015)

**INTERNATIONAL SEARCH REPORT**
Information on patent family members

International application No.

**PCT/CN2021/104772**

| Patent document cited in search report | | | Publication date (day/month/year) | Patent family member(s) | | | Publication date (day/month/year) |
|---|---|---|---|---|---|---|---|
| CN | 101048961 | A | 03 October 2007 | EP | 1653634 | A2 | 03 May 2006 |
| | | | | JP | 4402721 | B2 | 20 January 2010 |
| | | | | KR | 20060038300 | A | 03 May 2006 |
| | | | | EP | 1653634 | A3 | 12 June 2013 |
| | | | | WO | 2006046839 | A1 | 04 May 2006 |
| | | | | JP | 2008514156 | A | 01 May 2008 |
| | | | | US | 2006092875 | A1 | 04 May 2006 |
| | | | | EP | 1653634 | B1 | 21 December 2016 |
| | | | | US | 7826417 | B2 | 02 November 2010 |
| | | | | CN | 101048961 | B | 12 January 2011 |
| | | | | KR | 790115 | B1 | 31 December 2007 |
| CN | 107182118 | A | 19 September 2017 | CN | 107182118 | B | 15 November 2019 |
| US | 2005036481 | A1 | 17 February 2005 | EP | 1481502 | B1 | 14 May 2008 |
| | | | | US | 7483367 | B2 | 27 January 2009 |
| | | | | WO | 03075500 | A2 | 12 September 2003 |
| | | | | WO | 03075500 | A3 | 24 December 2003 |
| | | | | CA | 2477883 | C | 21 May 2013 |
| | | | | EP | 1481502 | A4 | 21 June 2006 |
| | | | | DE | 60320956 | D1 | 26 June 2008 |
| | | | | AU | 2003214593 | A1 | 16 September 2003 |
| | | | | EP | 1481502 | A2 | 01 December 2004 |
| | | | | AU | 2003214593 | A8 | 20 October 2005 |

Form PCT/ISA/210 (patent family annex) (January 2015)

**REFERENCES CITED IN THE DESCRIPTION**

**Patent documents cited in the description**

- CN 202010682134